(19) Europäisches Patentamt
European Patent Office
Office européen des brevets

(11) **EP 4 601 241 A1**

(12) **EUROPEAN PATENT APPLICATION**

(43) Date of publication:
**13.08.2025 Bulletin 2025/33**

(21) Application number: **24156920.1**

(22) Date of filing: **09.02.2024**

(51) International Patent Classification (IPC):
**H04L 9/00** (2022.01)   **G06Q 20/00** (2012.01)

(52) Cooperative Patent Classification (CPC):
**H04L 9/50;** H04L 2209/16; H04L 2209/56

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **BSV Association**
**6300 Zug (CH)**

(72) Inventor: **DUCROUX, Mathieu**
**London, W1W 8AP (GB)**

(74) Representative: **Page White Farrer**
**Bedford House**
**21a John Street**
**London WC1N 2BF (GB)**

(54) **BLOCKCHAIN TRANSACTION ARRAY OBFUSCATION**

(57)     Methods, devices, and data structures for processing large volumes of transactions in blockchain nodes. To prevent avoidance of validation operations by one or more nodes, a sending node creates an intentionally invalid array of blockchain transactions that contains an invalid transaction. The sending node provides the valid transaction to enable receiving nodes to replace the invalid transaction with the valid transaction, once the receiving nodes have detected invalidity of the invalid transaction, thereby enabling them to convert the invalid array of transactions into a valid array of transactions during a mining phase and prior to discovery of a block solution. The providing may be by way of direct peer-to-peer messaging between the sending node and the receiving node after invalidity is detected or through pre-broadcast of a commit message containing the valid transaction that the receiving nodes may unlock once they have identified the invalid transaction.

**EP 4 601 241 A1**

## Description

### TECHNICAL FIELD

The present disclosure relates to blockchain networks and, in particular, to methods and devices for ensuring nodes validate transactions and arrays of transactions.

### BACKGROUND

A blockchain refers to a form of distributed data structure, wherein a duplicate copy of the blockchain is maintained at each of a plurality of nodes in a distributed peer-to-peer (P2P) network (referred to below as a "blockchain network") and widely publicised. The blockchain is formed from a chain of blocks of data, wherein each block includes one or more transactions. Each transaction, other than so-called "coinbase transactions", points back to a preceding transaction in a sequence which may span one or more blocks up until one or more coinbase transactions. Coinbase transactions are discussed below. Transactions that are submitted to the blockchain network are included in new blocks. New blocks are created by a process often referred to as "mining", which involves each of a plurality of the nodes competing to perform "proof-of-work", i.e. solving a cryptographic puzzle based on a representation of a defined set of ordered and validated pending transactions waiting to be included in a new block of the blockchain. It should be noted that the blockchain may be pruned at a node, and the publication of blocks can be achieved through the publication of mere block headers.

The transactions in the blockchain are used to perform one or more of the following: to convey a digital asset (i.e. a number of digital tokens), to order a set of journal entries in a virtualised ledger or registry, to receive and process timestamp entries, and/or to time-order index pointers. A blockchain can also be exploited in order to layer additional functionality on top of the blockchain. Blockchain protocols may allow for storage of additional user data or indexes to data in a transaction. There is no pre-specified limit to the maximum data capacity that can be stored within a single transaction, and therefore increasingly more complex data can be incorporated. For instance this may be used to store an electronic document in the blockchain, or audio or video data.

Nodes of the blockchain network (which are often referred to as "miners") perform a distributed transaction registration and verification process, which will be described in detail below. In summary, during this process a node validates transactions and inserts them into a block template for which they attempt to identify a valid proof-of-work solution. Once a valid solution is found, a new block is propagated to other nodes of the network, thus enabling each node to record the new block on the blockchain. In order to have a transaction recorded in the blockchain, a user (e.g. a blockchain client application) sends the transaction to one of the nodes of the network to be propagated. Nodes which receive the transaction may race to find a proof-of-work solution incorporating the validated transaction into a new block. Each node is configured to enforce the same node protocol, which will include one or more conditions for a transaction to be valid. Invalid transactions will not be propagated nor incorporated into blocks. Assuming the transaction is validated and thereby accepted onto the blockchain, then the transaction (including any user data) will thus remain registered and indexed at each of the nodes in the blockchain network as an immutable public record.

The node who successfully solved the proof-of-work puzzle to create the latest block is typically rewarded with a new transaction called the "coinbase transaction" which distributes an amount of the digital asset, i.e. a number of tokens. The detection and rejection of invalid transactions is enforced by the actions of competing nodes who act as agents of the network and are incentivised to report and block malfeasance. The widespread publication of information allows users to continuously audit the performance of nodes. The publication of the mere block headers allows participants to ensure the ongoing integrity of the blockchain.

In an "output-based" model (sometimes referred to as a UTXO-based model), the data structure of a given transaction includes one or more inputs and one or more outputs. Any spendable output includes an element specifying an amount of the digital asset that is derivable from the proceeding sequence of transactions. The spendable output is sometimes referred to as a UTXO ("unspent transaction output"). The output may further include a locking script specifying a condition for the future redemption of the output. A locking script is a predicate defining the conditions necessary to validate and transfer digital tokens or assets. Each input of a transaction (other than a coinbase transaction) includes a pointer (i.e. a reference) to such an output in a preceding transaction, and may further include an unlocking script for unlocking the locking script of the pointed-to output. Consider that a pair of transactions may be labelled a first and a second transaction (or "target" transaction). The first transaction includes at least one output specifying an amount of the digital asset, and having a locking script defining one or more conditions of unlocking the output. The second, target transaction has at least one input, including a pointer to the output of the first transaction, and an unlocking script for unlocking the output of the first transaction.

In such a model, when the second, target transaction is sent to the blockchain network to be propagated and recorded in the blockchain, one of the criteria for validity applied at each node will be that the unlocking script meets all of the one or more conditions defined in the locking script of the first transaction. Another will be that the output of the first transaction has not already been redeemed by another, earlier valid transaction. Any node that finds the target transaction invalid according to any of these conditions will not propagate it (as a valid transaction, but possibly to register an invalid transaction) nor include it in a new block to be recorded in the blockchain.

An alternative type of transaction model is an account-based model. In this case each transaction does not define the amount to be transferred by referring back to the UTXO of a preceding transaction in a sequence of past transactions, but rather by reference to an absolute account balance. The current state of all accounts is stored by the nodes separate to the blockchain and is updated constantly.

As blockchain technology is applied to larger and larger numbers of transactions, managing the volume of transactions become challenging. For example, common credit card payment networks, such as Mastercard or Visa's payment networks, collectively typically process thousands of transactions per second. It may be advantageous to have solutions that would enable a blockchain network to manage similar levels of throughput.

## BRIEF DESCRIPTION OF THE DRAWINGS

Reference will now be made, by way of example, to the accompanying drawings which show example embodiments of the present application and in which:

FIG. 1 shows an example system for implementing a blockchain;

FIG. 2 illustrates an example transaction protocol;

FIG. 3A shows an example implementation of a client application;

FIG. 3B shows an example of a user interface for the client application;

FIG. 4 illustrates example node software for a blockchain node;

FIG. 5 diagrammatically shows a simplified example blockchain node for processing a large volume of blockchain transactions;

FIG. 6 shows, in flowchart form, one example method for detecting and excluding passive nodes from a blockchain network;

FIG. 7 shows a signal diagram illustrating one example method of obfuscating arrays through constructing and resolving poisoned arrays;

FIG. 8 shows a signal diagram illustrating another example method of obfuscating arrays;

FIG. 9 shows a signal diagram illustrating a further example method of obfuscating arrays; and

FIG. 10 shows a signal diagram illustrating yet another example method of obfuscating arrays.

Like reference numerals are used in the drawings to denote like elements and features.

## DETAILED DESCRIPTION OF EXAMPLES

In one aspect, there may be provided a method of obfuscating arrays of blockchain transactions by a sending node. The method may include propagating an invalid transaction on a blockchain network; generating an array of transactions forming at least part of a candidate block being mined by the sending node; obfuscating the array of transactions by replacing a valid transaction in the array with the invalid transaction to create an invalid array of transactions; transmitting the invalid array of transactions that includes the invalid transaction to receiving nodes in the blockchain network; and providing the valid transaction to one of the receiving nodes to enable said one of the receiving nodes to replace the invalid transaction with the valid transaction, once said one of the receiving nodes has detected invalidity of the invalid transaction, so as to convert the invalid array of transactions into the array of transactions during a mining phase and prior to discovery of a block solution.

In some implementations, providing includes receiving a peer-to-peer message from said one of the receiving nodes identifying the invalid transaction; and, in response, sending a response message to said one of the receiving nodes with the valid transaction to enable said one of the receiving nodes to replace the invalid transaction with the valid transaction so as to convert the invalid array of transactions into the array of transactions.

In some implementations, the propagating, the generating, the obfuscating, the transmitting, the receiving, and the sending all occur during the mining phase prior to discovery of the block solution.

In some implementations, the peer-to-peer message is an encrypted message.

In some implementations, providing includes broadcasting a commit message containing a hashed identifier of the invalid transaction and an identifier of the valid transaction, and wherein, during the mining phase, said one of the receiving nodes is to determine that the invalid transaction is invalid, hash an identifier of the invalid transaction to obtain a hash result, and match the hash result to the hashed identifier in the commit message to determine that the invalid transaction can be replaced by the valid transaction to fix the array of transactions. In some cases, the commit message includes a complexity parameter indicating a number of times the identifier of the invalid transaction is to be hashed to obtain the hash result.

In another aspect, the present application describes a method of validating arrays of blockchain transactions by a receiving node. The method may include receiving a valid transaction and an invalid transaction over a blockchain network; receiving an invalid array of transactions purporting to be at least part of a candidate block being mined by a sending node, wherein the invalid array of transactions includes the invalid transaction; performing a validation operation to determine that the invalid transaction is invalid; determining that the valid transaction is associated with the invalid transaction; and based on the association between the valid transaction and the invalid transaction, replacing the invalid transaction with the valid transaction so as to convert the invalid array of transactions into a valid array of transactions that is being mined by the sending node, thereby enabling the receiving node to validate the valid array of transactions during a mining phase and prior to discovery of a block solution.

In some implementations, determining that the valid transaction is associated with the invalid transaction includes: in response to determining that the invalid transaction is invalid, transmitting a peer-to-peer message to the sending node identifying the invalid transaction; receiving from the sending node, in response to the peer-to-peer message, a response message containing the valid transaction; and replacing the invalid transaction with the valid transaction so as to convert the invalid array of transactions into a valid array of transactions that is being mined by the other node, thereby enabling the node to validate the valid array of transactions. In some cases, the peer-to-peer message is an encrypted message.

In some implementations, the method further includes receiving a commit message containing a hashed identifier of the invalid transaction and an identifier of the valid transaction, and determining that the valid transaction is associated with the invalid transaction includes: hashing the transaction identifier of the invalid transaction to obtain a hash result; and, in response to determining that the hash result matches the hashed identifier in the commit message, replacing the invalid transaction with the valid replacement transaction so as to convert the invalid array of transactions into the valid array of transactions.

In some cases, the commit message includes a complexity parameter indicating a number of times the identifier of the invalid transaction is to be hashed to obtain the hash result.

In some implementations, the identifier of the valid transaction in the commit message includes a copy of the valid transaction.

In some implementations, receiving a commit message includes receiving and storing a plurality of commit messages broadcast by a plurality of nodes, each commit message containing a respective hashed identifier for a respective invalid transaction, and wherein determining that the hash result matches the hashed identifier includes comparing the hash result to the respective hashed identifiers and determining that the hash result matches one of the respective hashed identifiers.

In another aspect, there may be provided a computing device implementing a node on a blockchain network. The computing device may include memory, one or more processors, and computer-executable instructions that, when executed, cause the processors to carry out one or more of the methods described herein.

In yet another aspect, there may be provided a computer-readable medium storing processor-executable instructions, the processor-executable instructions including instructions that, when executed by one or more processors, cause the processors to carry out at least one of the methods described herein.

Other example embodiments of the present disclosure will be apparent to those of ordinary skill in the art from a review of the following detailed description in conjunction with the drawings.

In the present application, the term "and/or" is intended to cover all possible combinations and sub-combinations of the listed elements, including any one of the listed elements alone, any sub-combination, or all of the elements, and without necessarily excluding additional elements.

In the present application, the phrase "at least one of... or... " is intended to cover any one or more of the listed elements, including any one of the listed elements alone, any sub-combination, or all of the elements, without necessarily excluding any additional elements, and without necessarily requiring all of the elements.

*Example System Overview*

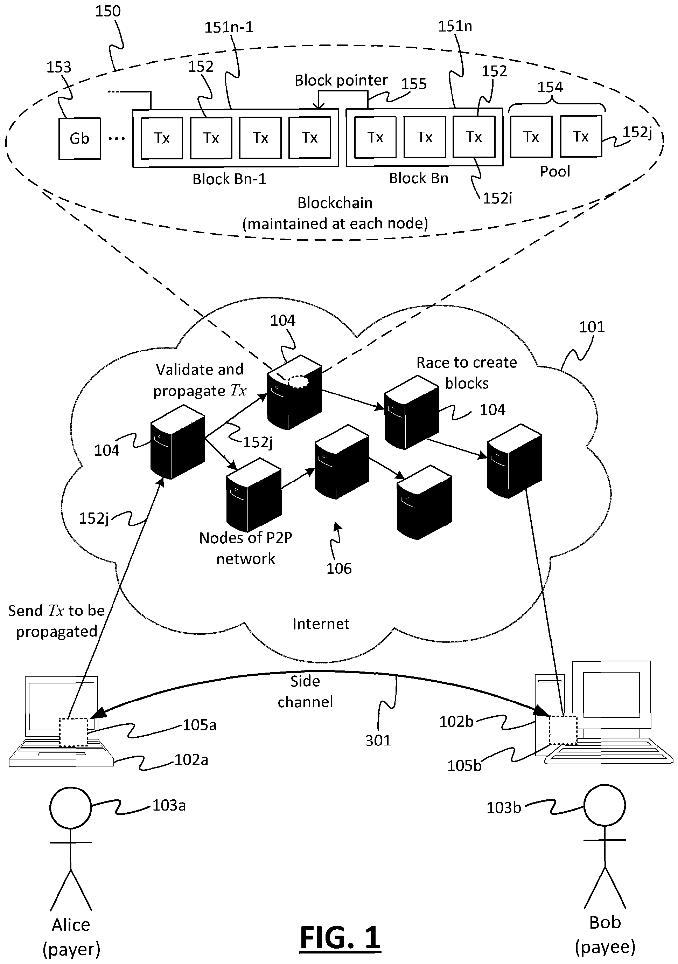

Figure 1 shows an example system 100 for implementing a blockchain 150. The system 100 may include a packet-switched network 101, typically a wide-area internetwork such as the Internet. The packet-switched network 101 includes a plurality of blockchain nodes 104 that may be arranged to form a peer-to-peer (P2P) network 106 within the packet-switched network 101. Whilst not illustrated, the blockchain nodes 104 may be arranged as a near-complete graph. Each blockchain node 104 is therefore highly connected to other blockchain nodes 104.

Each blockchain node 104 includes computer equipment of a peer, with different ones of the nodes 104 belonging to different peers. Each blockchain node 104 includes a processing apparatus implemented by one or more processors, e.g. one or more central processing units (CPUs), accelerator processors, application specific processors and/or field programmable gate arrays (FPGAs), and other equipment such as Application Specific Integrated Circuits (ASICs). Each node also includes memory, i.e. computer-readable storage in the form of a non-transitory computer-readable medium or media. The memory may include one or more memory units employing one or more memory media, e.g. a magnetic medium such as a hard disk; an electronic medium such as a solid-state drive (SSD), flash memory or EEPROM; and/or an optical medium such as an optical disk drive.

The blockchain 150 includes a chain of blocks of data 151, wherein a respective copy of the blockchain 150 is maintained at each of a plurality of blockchain nodes 104 in the distributed or blockchain network 160. As mentioned above, maintaining a copy of the blockchain 150 does not necessarily mean storing the blockchain 150 in full. Instead, the blockchain 150 may be pruned of data so long as each blockchain node 150 stores the blockheader (discussed below) of each block 151. Each block 151 in the chain includes one or more transactions 152, wherein a transaction in this context refers to a kind of data structure. The nature of the data structure will depend on the type of transaction protocol used as part of a transaction model or scheme. A given blockchain will use one particular transaction protocol throughout. In one common type of transaction protocol, the data structure of each transaction 152 has at least one input and at least one output. Each output specifies an amount representing a quantity of a digital asset as property, an example of which is a user 103 to whom the output is cryptographically locked (requiring a signature or other solution of that user in order to be unlocked and thereby redeemed or spent). Each input points back to the output of a preceding transaction 152, thereby linking the transactions.

Each block 151 also includes a block pointer 155 pointing back to the previously created block 151 in the chain so as to define a sequential order to the blocks 151. Each transaction 152 (other than a coinbase transaction) has a pointer back to a previous transaction so as to define an order to sequences of transactions (N.B. sequences of transactions 152 are allowed to branch). The chain of blocks 151 goes all the way back to a genesis block (Gb) 153 which was the first block in the chain. One or more original transactions 152 early on in the chain 150 pointed to the genesis block 153 rather than a preceding transaction.

Each of the blockchain nodes 104 is configured to forward transactions 152 to other blockchain nodes 104, and thereby cause transactions 152 to be propagated throughout the network 106. Each blockchain node 104 is configured to create blocks 151 and to store a respective copy of the same blockchain 150 in their respective memory. Each blockchain node 104 also maintains an ordered set 154 of transactions 152 waiting to be incorporated into blocks 151. The ordered set 154 is often referred to as a "mempool". This term herein is not intended to limit to any particular blockchain, protocol or model. It refers to the ordered set of transactions which a node 104 has accepted as valid and for which the node 104 is obliged not to accept any other transactions attempting to spend the same output.

In a given present transaction 152j, the (or each) input includes a pointer referencing the output of a preceding transaction 152i in the sequence of transactions, specifying that this output is to be redeemed or "spent" in the present transaction 152j. In general, the preceding transaction could be any transaction in the ordered set 154 or any block 151. The preceding transaction 152i need not necessarily exist at the time the present transaction 152j is created or even sent to the network 106, though the preceding transaction 152i will need to exist and be validated in order for the present transaction to be valid. Hence "preceding" herein refers to a predecessor in a logical sequence linked by pointers, not necessarily the time of creation or sending in a temporal sequence, and hence it does not necessarily exclude that the transactions 152i, 152j be created or sent out-of-order (see discussion below on orphan transactions). The preceding transaction 152i could equally be called the antecedent or predecessor transaction.

The input of the present transaction 152j also includes the input authorisation, for example the signature of the user 103a to whom the output of the preceding transaction 152i is locked. In turn, the output of the present transaction 152j can be cryptographically locked to a new user or entity 103b. The present transaction 152j can thus transfer the amount defined in the input of the preceding transaction 152i to the new user or entity 103b as defined in the output of the present transaction 152j. In some cases a transaction 152 may have multiple outputs to split the input amount between multiple users or entities (one of whom could be the original user or entity 103a in order to give change). In some cases a transaction can also have multiple inputs to gather together the amounts from multiple outputs of one or more preceding transactions, and redistribute to one or more outputs of the current transaction.

According to an output-based transaction protocol such as bitcoin, when an entity, such as a user or machine, 103 wishes to enact a new transaction 152j, then the entity sends the new transaction from its computer terminal 102 to a recipient. The entity or the recipient will eventually send this transaction to one or more of the blockchain nodes 104 of the network 106 (which nowadays are typically servers or data centres, but could in principle be other user terminals). It is also not excluded that the entity 103 enacting the new transaction 152j could send the transaction to one or more of the blockchain nodes 104 and, in some examples, not to the recipient. A blockchain node 104 that receives a transaction checks whether the transaction is valid according to a blockchain node protocol which is applied at each of the blockchain nodes 104. The blockchain node protocol typically requires the blockchain node 104 to check that a cryptographic signature in the new transaction 152j matches the expected signature, which depends on the previous transaction 152i in an ordered sequence of transactions 152. In such an output-based transaction protocol, this may include checking that the cryptographic signature or other authorisation of the entity 103 included in the input of the new transaction 152j matches a condition defined in the output of the preceding transaction 152i which the new transaction assigns, wherein this condition typically includes at least checking that the cryptographic signature or other authorisation in the input of the new transaction 152j unlocks the output of the previous transaction 152i to which the input of the new transaction is linked to. The condition may be at least partially defined by a script included in the output of the preceding transaction 152i. Alternatively it could simply be fixed by the blockchain node protocol alone, or it could be due to a combination of these. Either way, if the new transaction 152j is valid, the blockchain node 104 forwards it to one or more other blockchain nodes 104 in the blockchain network 106. These other blockchain nodes 104 apply the same test according to the same blockchain node protocol, and so forward the new transaction 152j on to one or more further nodes 104, and so forth. In this way the new transaction is propagated throughout the network of blockchain nodes 104.

In an output-based model, the definition of whether a given output (e.g. UTXO) is assigned is whether it has yet been validly redeemed by the input of another, onward transaction 152j according to the blockchain node protocol. Another condition for a transaction to be valid is that the output of the preceding transaction 152i which it attempts to assign or redeem has not already been assigned/redeemed by another transaction. Again if not valid, the transaction 152j will not be propagated (unless flagged as invalid and propagated for alerting) or recorded in the blockchain 150. This guards against double-spending whereby the transactor tries to assign the output of the same transaction more than once. An account-based model on the other hand guards against double-spending by maintaining an account balance. Because again there is a defined order of transactions, the account balance has a single defined state at any one time.

In addition to validating transactions, blockchain nodes 104 also race to be the first to create blocks of transactions in a process commonly referred to as mining, which is supported by "proof-of-work". At a blockchain node 104, new transactions are added to an ordered set 154 of valid transactions that have not yet appeared in a block 151 recorded on the blockchain 150. The blockchain nodes then race to assemble a new valid block 151 of transactions 152 from the ordered set of transactions 154 by attempting to solve a cryptographic puzzle. Typically this includes searching for a "nonce" value such that when the nonce is concatenated with a representation of the ordered set of transactions 154 and hashed, then the output of the hash meets a predetermined condition. For example, the predetermined condition may be that the output of the hash has a certain predefined number of leading zeros. Note that this is just one particular type of proof-of-work puzzle, and other types are not excluded. A property of a hash function is that it has an unpredictable output with respect to its input. Therefore this search can only be performed by brute force, thus consuming a substantive amount of processing resource at each blockchain node 104 that is trying to solve the puzzle.

The first blockchain node 104 to solve the puzzle announces this to the network 106, providing the solution as proof which can then be easily checked by the other blockchain nodes 104 in the network (once given the solution to a hash it is straightforward to check that it causes the output of the hash to meet the condition). The first blockchain node 104 propagates a block to a threshold consensus of other nodes that accept the block and thus enforce the protocol rules. The ordered set of transactions 154 then becomes recorded as a new block 151 in the blockchain 150 by each of the blockchain nodes 104. A block pointer 155 is also assigned to the new block 151n pointing back to the previously created block 151n-1 in the chain. A significant amount of effort, for example in the form of hash, required to create a proof-of-work solution signals the intent of the first node 104 to follow the rules of the blockchain protocol. Such rules include not accepting a transaction as valid if it assigns the same output as a previously validated transaction, otherwise known as double-spending. Once created, the block 151 cannot be modified since it is recognized and maintained at each of the blockchain nodes 104 in the blockchain network 106. The block pointer 155 also imposes a sequential order to the blocks 151. Since the transactions 152 are recorded in the ordered blocks at each blockchain node 104 in a network 106, this therefore provides an immutable public ledger of the transactions.

Note that different blockchain nodes 104 racing to solve the puzzle at any given time may be doing so based on different snapshots of the ordered set of yet to be published transactions 154 at any given time, depending on when they started searching for a solution or the order in which the transactions were received. Whoever solves their respective puzzle first defines which transactions 152 are included in the next new block 151n and in which order, and the current set 154 of unpublished transactions is updated. The blockchain nodes 104 then continue to race to create a block from the newly-defined outstanding ordered set of unpublished transactions 154, and so forth. A protocol also exists for resolving any "fork" that may arise, which is where two blockchain nodes 104 solve their puzzle within a very short time of one another such that a conflicting view of the blockchain gets propagated between nodes 104. In short, whichever prong of the fork grows the longest becomes the definitive blockchain 150. Note this should not affect the users or agents of the network as the same transactions will appear in both forks.

According to the bitcoin blockchain (and most other blockchains) a node that successfully constructs a new block 104 is granted the ability to assign an accepted amount of the digital asset in a new special kind of transaction which distributes a defined quantity of the digital asset (as opposed to an inter-agent, or inter-user transaction which transfers an amount of the digital asset from one agent or user to another). This special type of transaction is usually referred to as a "coinbase transaction", but may also be termed an "initiation transaction". It typically forms the first transaction of the new block 151n. The proof-of-work signals the intent of the node that constructs the new block to follow the protocol rules allowing this special transaction to be redeemed later. The blockchain protocol rules may require a maturity period, for example 100 blocks, before this special transaction may be redeemed. Often a regular (non-generation) transaction 152 will also specify an additional transaction fee in one of its outputs, to further reward the blockchain node 104 that created the block 151n in which that transaction was published. This fee is normally referred to as the "transaction fee", and is discussed blow.

Due to the resources involved in transaction validation and publication, typically at least each of the blockchain nodes 104 takes the form of a server that includes one or more physical server units, or even whole a data centre. However in principle any given blockchain node 104 could take the form of a user terminal or a group of user terminals networked together.

The memory of each blockchain node 104 stores software configured to run on the processing apparatus of the blockchain node 104 in order to perform its respective role or roles and handle transactions 152 in accordance with the blockchain node protocol. It will be understood that any action attributed herein to a blockchain node 104 may be performed by the software run on the processing apparatus of the respective computer equipment. The node software may be implemented in one or more applications at the application layer, or a lower layer such as the operating system layer or a protocol layer, or any combination of these.

Also connected to the network 101 is the computer equipment 102 of each of a plurality of parties 103 in the role of consuming users. These users may interact with the blockchain network but do not participate in validating, constructing or propagating transactions and blocks. Some of these users or agents 103 may act as senders and recipients in transactions. Other users may interact with the blockchain 150 without necessarily acting as senders or recipients. For instance, some parties may act as storage entities that store a copy of the blockchain 150 (e.g. having obtained a copy of the blockchain from a blockchain node 104).

Some or all of the parties 103 may be connected as part of a different network, e.g. a network overlaid on top of the blockchain network 106. Users of the blockchain network (often referred to as "clients") may be said to be part of a system that includes the blockchain network; however, these users are not blockchain nodes 104 as they do not perform the roles required of the blockchain nodes. Instead, each party 103 may interact with the blockchain network 106 and thereby utilize the blockchain 150 by connecting to (i.e. communicating with) a blockchain node 106. Two parties 103 and their respective equipment 102 are shown for illustrative purposes: a first party 103a and his/her respective computer equipment 102a, and a second party 103b and his/her respective computer equipment 102b. It will be understood that many more such parties 103 and their respective computer equipment 102 may be present and participating in the system 100, but for convenience they are not illustrated. Each party 103 may be an individual or an organization. Purely by way of illustration the first party 103a is referred to herein as Alice and the second party 103b is referred to as Bob, but it will be appreciated that this is not limiting and any reference herein to Alice or Bob may be replaced with "first party" and "second "party" respectively.

The computer equipment 102 of each party 103 comprises respective processing apparatus including one or more processors, e.g. one or more CPUs, GPUs, other accelerator processors, application specific processors, and/or FPGAs. The computer equipment 102 of each party 103 further includes memory, i.e. computer-readable storage in the form of a non-transitory computer-readable medium or media. This memory may include one or more memory units employing one or more memory media, e.g. a magnetic medium such as hard disk; an electronic medium such as an SSD, flash memory or EEPROM; and/or an optical medium such as an optical disc drive. The memory on the computer equipment 102 of each party 103 stores software such as a respective instance of at least one client application 105 arranged to run on the processing apparatus. It will be understood that any action attributed herein to a given party 103 may be performed using the software run on the processing apparatus of the respective computer equipment 102. The computer equipment 102 of each party 103 includes at least one user terminal, e.g. a desktop or laptop computer, a tablet, a smartphone, or a wearable device such as a smartwatch. The computer equipment 102 of a given party 103 may also include one or more other networked resources, such as cloud computing resources accessed via the user terminal.

The client application 105 may be initially provided to the computer equipment 102 of any given party 103 on suitable computer-readable storage medium or media, e.g. downloaded from a server, or provided on a removable storage device such as a removable SSD, flash memory key, removable EEPROM, removable magnetic disk drive, magnetic floppy disk or tape, optical disk such as a CD or DVD ROM, or a removable optical drive, etc.

The client application 105 includes at least a "wallet" function. This has two main functionalities. One of these is to enable the respective party 103 to create, authorise (for example sign) and send transactions 152 to one or more bitcoin nodes 104 to then be propagated throughout the network of blockchain nodes 104 and thereby included in the blockchain 150. The other is to report back to the respective party the amount of the digital asset that he or she currently owns. In an output-based system, this second functionality includes collating the amounts defined in the outputs of the various 152 transactions scattered throughout the blockchain 150 that belong to the party in question.

It will be understood that whilst the various client functionality may be described as being integrated into a given client application 105, this is not necessarily limiting and instead any client functionality described herein may instead be implemented in a suite of two or more distinct applications, e.g. interfacing via an API, or one being a plug-in to the other. More generally the client functionality could be implemented at the application layer or a lower layer such as the operating system, or any combination of these. The following will be described in terms of a client application 105 but it will be appreciated that this is not limiting.

The instance of the client application or software 105 on each computer equipment 102 is operatively coupled to at least one of the blockchain nodes 104 of the network 106. This enables the wallet function of the client 105 to send transactions 152 to the network 106. The client 105 is also able to contact blockchain nodes 104 in order to query the blockchain 150 for any transactions of which the respective party 103 is the recipient (or indeed inspect other parties' transactions in the blockchain 150, since in embodiments the blockchain 150 is a public facility which provides trust in transactions in part through its public visibility). The wallet function on each computer equipment 102 is configured to formulate and send transactions 152 according to a transaction protocol. As set out above, each blockchain node 104 runs software configured to validate transactions 152 according to the blockchain node protocol, and to forward transactions 152 in order to propagate them throughout the blockchain network 106. The transaction protocol and the node protocol correspond to one another, and a given transaction protocol goes with a given node protocol, together implementing a given transaction model. The same transaction protocol is used for all transactions 152 in the blockchain 150. The same node protocol is used by all the nodes 104 in the network 106.

When a given party 103, say Alice, wishes to send a new transaction 152j to be included in the blockchain 150, then she formulates the new transaction in accordance with the relevant transaction protocol (using the wallet function in her client application 105). She then sends the transaction 152 from the client application 105 to one or more blockchain nodes 104 to which she is connected. E.g. this could be the blockchain node 104 that is best connected to Alice's computer 102. When any given blockchain node 104 receives a new transaction 152j, it handles it in accordance with the blockchain node protocol and its respective role. This may include first checking whether the newly received transaction 152j meets a certain condition for being "valid", examples of which will be discussed in more detail shortly. In some transaction protocols, the condition for validation may be configurable on a per-transaction basis by scripts included in the transactions 152. Alternatively the condition could simply be a built-in feature of the node protocol, or be defined by a combination of the script and the node protocol.

On condition that the newly received transaction 152j passes the test for being deemed valid (i.e. on condition that it is "validated"), any blockchain node 104 that receives the transaction 152j will add the new validated transaction 152 to the ordered set of transactions 154 maintained at that blockchain node 104. Further, any blockchain node 104 that receives the transaction 152j will propagate the validated transaction 152 onward to one or more other blockchain nodes 104 in the network 106. Since each blockchain node 104 applies the same protocol, then assuming the transaction 152j is valid, this means it will soon be propagated throughout the whole network 106.

Once admitted to the ordered set of transactions 154 maintained at a given blockchain node 104, that blockchain node 104 will start competing to solve the proof-of-work puzzle on the latest version of their respective ordered set of transactions 154 including the new transaction 152 (recall that other blockchain nodes 104 may be trying to solve the puzzle based on a different ordered set of transactions 154, but whoever gets there first will define the ordered set of transactions that are included in the latest block 151, and eventually a blockchain node 104 will solve the puzzle for a part of the ordered set 154 which includes Alice's transaction 152j). Once the proof-of-work has been done for the ordered set 154 including the new transaction 152j, it immutably becomes part of one of the blocks 151 in the blockchain 150. Each transaction 152 includes a pointer back to an earlier transaction, so the order of the transactions is also immutably recorded.

Different blockchain nodes 104 may receive different instances of a given transaction first and therefore have conflicting views of which instance is 'valid' before one instance is published in a new block 151, at which point all blockchain nodes 104 agree that the published instance is the only valid instance. If a blockchain node 104 accepts one instance as valid, and then discovers that a second instance has been recorded in the blockchain 150 then that blockchain node 104 must accept this and will discard (i.e. treat as invalid) the instance which it had initially accepted (i.e. the one that has not been published in a block 151).

An alternative type of transaction protocol operated by some blockchain networks may be referred to as an "account-based" protocol, as part of an account-based transaction model. In the account-based case, each transaction does not define the amount to be transferred by referring back to the UTXO of a preceding transaction in a sequence of past transactions, but rather by reference to an absolute account balance. The current state of all accounts is stored, by the nodes of that network, separate to the blockchain and is updated constantly. In such a system, transactions are ordered using a running transaction tally of the account (also called the "position"). This value is signed by the sender as part of their cryptographic signature and is hashed as part of the transaction reference calculation. In addition, an optional data field may also be signed the transaction. This data field may point back to a previous transaction, for example if the previous transaction ID is included in the data field.

### UTXO-based Model

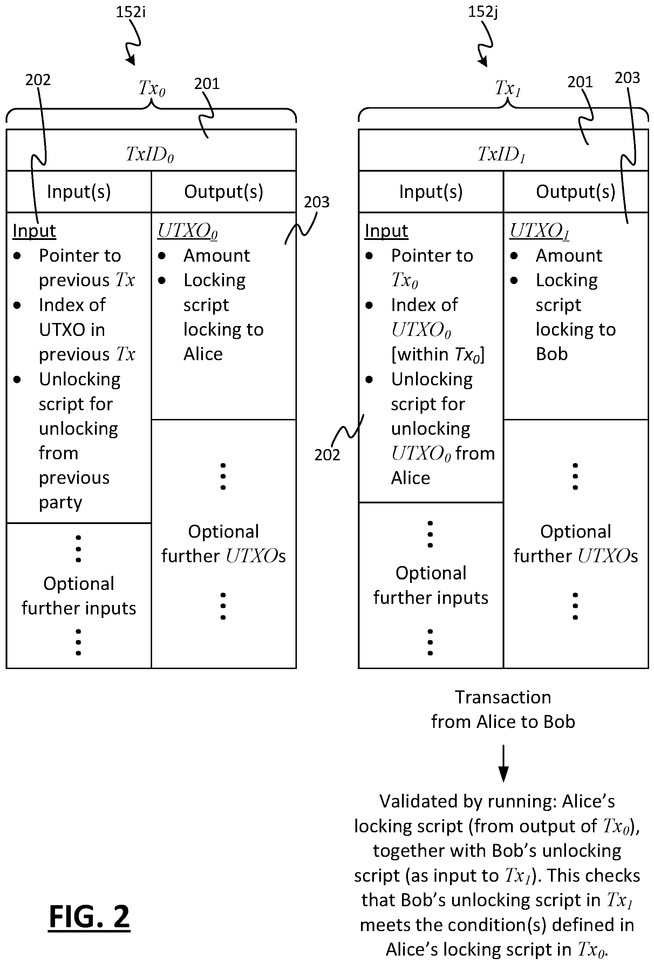

Figure 2 illustrates an example transaction protocol. This is an example of a UTXO-based protocol. A transaction 152 (abbreviated "Tx") is the fundamental data structure of the blockchain 150 (each block 151 containing one or more transactions 152). The following will be described by reference to an output-based or "UTXO" based protocol. However, this is not limiting to all possible embodiments. Note that while the example UTXO-based protocol is described with reference to bitcoin, it may equally be implemented on other example blockchain networks.

In a UTXO-based model, each transaction ("Tx") 152 is a data structure having one or more inputs 202, and one or more outputs 203. Each output 203 may include an unspent transaction output (UTXO), which can be used as the source for the input 202 of another new transaction (if the UTXO has not already been redeemed). The UTXO includes a value specifying an amount of a digital asset. This represents a set number of tokens on the distributed ledger. The UTXO may also contain the transaction ID of the transaction from which it came, amongst other information. The transaction data structure may also include a header 201, which may include an indicator of the size of the input field(s) 202 and output field(s) 203. The header 201 may also include an ID of the transaction. In some embodiments, the transaction ID is the hash of the transaction data (excluding the transaction ID itself) and stored in the header 201 of the raw transaction 152 submitted to the nodes 104.

Say Alice 103a wishes to create a transaction 152j transferring an amount of the digital asset in question to Bob 103b. In Figure 2 Alice's new transaction 152j is labelled *"Tx$_1$"*. It takes an amount of the digital asset that is locked to Alice in the output 203 of a preceding transaction 152i in the sequence, and transfers at least some of this to Bob. The preceding transaction 152i is labelled *"Tx$_0$"* in Figure 2. $Tx_0$ and $Tx_1$ are just arbitrary labels. They do not necessarily mean that $Tx_0$ is the first transaction in the blockchain 151, nor that $Tx_1$ is the immediate next transaction in the pool 154. $Tx_1$ could point back to any preceding (i.e. antecedent) transaction that still has an unspent output 203 locked to Alice.

The preceding transaction $Tx_0$ may already have been validated and included in a block 151 of the blockchain 150 at the time when Alice creates her new transaction $Tx_1$, or at least by the time she sends it to the network 106. It may already have been included in one of the blocks 151 at that time, or it may be still waiting in the ordered set 154 in which case it will soon be included in a new block 151. Alternatively $Tx_0$ and $Tx_1$ could be created and sent to the network 106 together, or $Tx_0$ could even be sent after $Tx_1$ if the node protocol allows for buffering "orphan" transactions. The terms "preceding" and "subsequent" as used herein in the context of the sequence of transactions refer to the order of the transactions in the sequence as defined by the transaction pointers specified in the transactions (which transaction points back to which other transaction, and so forth). They could equally be replaced with "predecessor" and "successor", or "antecedent" and "descendant", "parent" and "child", or such like. It does not necessarily imply an order in which they are created, sent to the network 106, or arrive at any given blockchain node 104. Nevertheless, a subsequent transaction (the descendent transaction or "child") which points to a preceding transaction (the antecedent transaction or "parent") will not be validated until and unless the parent transaction is validated. A child that arrives at a blockchain node 104 before its parent is considered an orphan. It may be discarded or buffered for a certain time to wait for the parent, depending on the node protocol and/or node behaviour.

One of the one or more outputs 203 of the preceding transaction $Tx_0$ is a particular UTXO, labelled here $UTXO_0$. Each UTXO includes a value specifying an amount of the digital asset represented by the UTXO, and a locking script which defines a condition which must be met by an unlocking script in the input 202 of a subsequent transaction in order for the subsequent transaction to be validated, and therefore for the UTXO to be successfully redeemed. Typically the locking script locks the amount to a particular party (the beneficiary of the transaction in which it is included). That is, the locking script defines an unlocking condition, typically include a condition that the unlocking script in the input of the subsequent transaction include the cryptographic signature of the party to whom the preceding transaction is locked.

The locking script (aka scriptPubKey) is a piece of code written in the domain specific language recognized by the node protocol. A particular example of such a language is called "Script" (capital S) which is used by the blockchain network. The locking script specifies what information is required to spend a transaction output 203, for example the requirement of Alice's signature. Unlocking scripts appear in the outputs of transactions. The unlocking script (aka scriptSig) is a piece of code written the domain specific language that provides the information required to satisfy the locking script criteria. For example, it may contain Bob's signature. Unlocking scripts appear in the input 202 of transactions.

So in the example illustrated, $UTXO_0$ in the output 203 of $Tx_0$ includes a locking script [Checksig $P_A$] which requires a signature Sig $P_A$ of Alice in order for $UTXO_0$ to be redeemed (strictly, in order for a subsequent transaction

attempting to redeem $UTXO_0$ to be valid). [Checksig $P_A$] contains a representation (i.e. a hash) of the public key $P_A$ from a public-private key pair of Alice. The input 202 of $Tx_1$ includes a pointer pointing back to $Tx_0$ (e.g. by means of its transaction ID, $TxID_0$, which in some embodiments is the hash of the whole transaction $Tx_0$). The input 202 of $Tx_1$ includes an index identifying $UTXO_0$ within $Tx_0$, to identify it amongst any other possible outputs of $Tx_0$. The input 202 of $Tx_1$ further includes an unlocking script <Sig $P_A$> which has a cryptographic signature of Alice, created by Alice applying her private key from the key pair to a predefined portion of data (sometimes called the "message" in cryptography). The data (or "message") that needs to be signed by Alice to provide a valid signature may be defined by the locking script, or by the node protocol, or by a combination of these.

When the new transaction $Tx_1$ arrives at a blockchain node 104, the node applies the node protocol. This may include running the locking script and unlocking script together to check whether the unlocking script meets the condition defined in the locking script (where this condition may include one or more criteria). In some embodiments this may involve concatenating the two scripts:

$$<\text{Sig } P_A> <P_A> \| [\text{Checksig } P_A]$$

where "‖" represents a concatenation and "<...>" means place the data on the stack, and "[...]" is a function carried out by the locking script (in this example a stack-based language). Equivalently the scripts may be run one after the other, with a common stack, rather than concatenating the scripts. Either way, when run together, the scripts use the public key $P_A$ of Alice, as included in the locking script in the output of $Tx_0$, to authenticate that the unlocking script in the input of $Tx_1$ contains the signature of Alice signing the expected portion of data. The expected portion of data itself (the "message") also needs to be included in order to perform this authentication. In embodiments the signed data includes the whole of $Tx_1$ (so a separate element does not need to be included specifying the signed portion of data in the clear, as it is already inherently present).

The details of authentication by public-private cryptography will be familiar to a person skilled in the art. Basically, if Alice has signed a message using her private key, then given Alice's public key and the message in the clear, another entity such as a node 104 is able to authenticate that the message must have been signed by Alice. Signing typically includes hashing the message, signing the hash, and tagging this onto the message as a signature, thus enabling any holder of the public key to authenticate the signature. Note therefore that any reference herein to signing a particular piece of data or part of a transaction, or such like, can in embodiments mean signing a hash of that piece of data or part of the transaction.

If the unlocking script in $Tx_1$ meets the one or more conditions specified in the locking script of $Tx_0$ (so in the example shown, if Alice's signature is provided in $Tx_1$ and authenticated), then the blockchain node 104 deems $Tx_1$ valid. This means that the blockchain node 104 will add $Tx_1$ to the ordered set of transactions 154. The blockchain node 104 will also forward the transaction $Tx_1$ to one or more other blockchain nodes 104 in the network 106, so that it will be propagated throughout the network 106. Once $Tx_1$ has been validated and included in the blockchain 150, this defines $UTXO_0$ from $Tx_0$ as spent. Note that $Tx_1$ can only be valid if it spends an unspent transaction output 203. If it attempts to spend an output that has already been spent by another transaction 152, then $Tx_1$ will be invalid even if all the other conditions are met. Hence the blockchain node 104 also needs to check whether the referenced UTXO in the preceding transaction $Tx_0$ is already spent (i.e. whether it has already formed a valid input to another valid transaction). This is one reason why it is important for the blockchain 150 to impose a defined order on the transactions 152. In practice, a given blockchain node 104 may maintain a separate database marking which UTXOs 203 in which transactions 152 have been spent, but ultimately what defines whether a UTXO has been spent is whether it has already formed a valid input to another valid transaction in the blockchain 150.

If the total amount specified in all the outputs 203 of a given transaction 152 is greater than the total amount pointed to by all its inputs 202, this is another basis for invalidity in most transaction models. Therefore such transactions will not be propagated nor included in a block 151.

Note that in UTXO-based transaction models, a given UTXO needs to be spent as a whole. It cannot "leave behind" a fraction of the amount defined in the UTXO as spent while another fraction is spent. However, the amount from the UTXO can be split between multiple outputs of the next transaction. For example, the amount defined in $UTXO_0$ in $Tx_0$ can be split between multiple UTXOs in $Tx_1$. Hence if Alice does not want to give Bob all of the amount defined in $UTXO_0$, she can use the remainder to give herself change in a second output of $Tx_1$, or pay another party.

In practice Alice will also usually need to include a fee for the bitcoin node that publishes her transaction 104. If Alice does not include such a fee, $Tx_0$ may be rejected by the blockchain nodes 104, and hence although technically valid, may not be propagated and included in the blockchain 150 (the node protocol does not force blockchain nodes 104 to accept transactions 152 if they don't want). In some protocols, the transaction fee does not require its own separate output 203 (i.e. does not need a separate UTXO). Instead any difference between the total amount pointed to by the input(s) 202 and the total amount of specified in the output(s) 203 of a given transaction 152 is automatically given to the blockchain node 104 publishing the transaction. For example, say a pointer to $UTXO_0$ is the only input to $Tx_1$, and $Tx_1$ has only one output $UTXO_1$. If the amount of the digital asset specified in $UTXO_0$ is greater than the amount specified in $UTXO_1$, then the difference may be assigned by the node 104 that publishes the block containing $UTXO_1$. Alternatively or additionally however, it is not necessarily excluded that a transaction fee could be specified explicitly in its own one of the UTXOs 203 of the transaction 152.

Alice and Bob's digital assets consist of the UTXOs locked to them in any transactions 152 anywhere in the blockchain 150. Hence, typically, the assets of a given party 103 are scattered throughout the UTXOs of various transactions 152 throughout the blockchain 150. There is no one number stored anywhere in the blockchain 150 that defines the total balance of a given party 103. It is the role of the wallet function in the client application 105 to collate together the values of all the various UTXOs which are locked to the respective party and have not yet been spent in another onward transaction. It can do this by querying the copy of the blockchain 150 as stored at any of the bitcoin nodes 104.

Note that the script code is often represented schematically (i.e. not using the exact language). For example, one may use operation codes (opcodes) to represent a particular function. "OP_..." refers to a particular opcode of the Script language. As an example, OP_RETURN is an opcode of the Script language that when preceded by OP_FALSE at the beginning of a locking script creates an unspendable output of a transaction that can store data within the transaction, and thereby record the data immutably in the blockchain 150. For example, the data could include a document which it is desired to store in the blockchain.

Typically an input of a transaction contains a digital signature corresponding to a public key $P_A$. In embodiments this is based on the ECDSA using the elliptic curve secp256k1. A digital signature signs a particular piece of data. In some embodiments, for a given transaction the signature will sign part of the transaction input, and some or all of the transaction outputs. The particular parts of the outputs it signs depends on the SIGHASH flag. The SIGHASH flag is usually a 4-byte code included at the end of a signature to select which outputs are signed (and thus fixed at the time of signing).

The locking script is sometimes called "scriptPubKey" referring to the fact that it typically includes the public key of the party to whom the respective transaction is locked. The unlocking script is sometimes called "scriptSig" referring to the fact that it typically supplies the corresponding signature. However, more generally it is not essential in all applications of a blockchain 150 that the condition for a UTXO to be redeemed includes authenticating a signature. More generally the scripting language could be used to define any one or more conditions. Hence the more general terms "locking script" and "unlocking script" may be preferred.

As shown in Figure 1, the client application on each of Alice and Bob's computer equipment 102a, 120b, respectively, may include additional communication functionality. This additional functionality enables Alice 103a to establish a separate side channel 301 with Bob 103b (at the instigation of either party or a third party). The side channel 301 enables exchange of data separately from the blockchain network. Such communication is sometimes referred to as "off-chain" communication. For instance this may be used to exchange a transaction 152 between Alice and Bob without the transaction (yet) being registered onto the blockchain network 106 or making its way onto the chain 150, until one of the parties chooses to broadcast it to the network 106. Sharing a transaction in this way is sometimes referred to as sharing a "transaction template". A transaction template may lack one or more inputs and/or outputs that are required in order to form a complete transaction. Alternatively or additionally, the side channel 301 may be used to exchange any other transaction related data, such as keys, negotiated amounts or terms, data content, etc.

The side channel 301 may be established via the same packet-switched network 101 as the blockchain network 106. Alternatively or additionally, the side channel 301 may be established via a different network such as a mobile cellular network, or a local area network such as a local wireless network, or even a direct wired or wireless link between Alice and Bob's devices 102a, 102b. Generally, the side channel 301 as referred to anywhere herein may include any one or more links via one or more networking technologies or communication media for exchanging data "off-chain", i.e. separately from the blockchain network 106. Where more than one link is used, then the bundle or collection of off-chain links as a whole may be referred to as the side channel 301. Note therefore that if it is said that Alice and Bob exchange certain pieces of information or data, or such like, over the side channel 301, then this does not necessarily imply all these pieces of data have to be send over exactly the same link or even the same type of network.

### Client Software

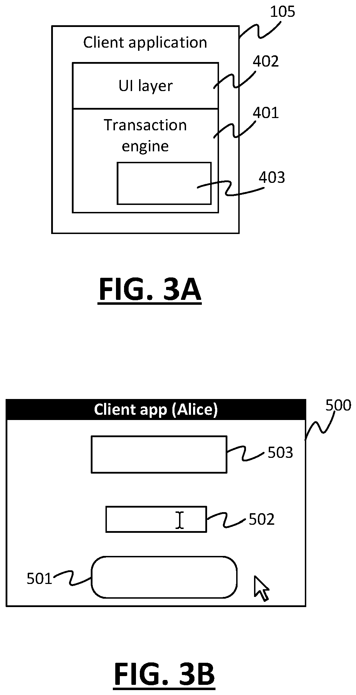

Figure 3A illustrates an example implementation of the client application 105 for implementing embodiments of the presently disclosed scheme. The client application 105 may include a transaction engine 401 and a user interface (UI) layer 402. The transaction engine 401 is configured to implement the underlying transaction-related functionality of the client 105, such as to formulate transactions 152, receive and/or send transactions and/or other data over the side channel 301, and/or send transactions to one or more nodes 104 to be propagated through the blockchain network 106, in accordance with the processes discussed above.

The UI layer 402 is configured to render a user interface via a user input/output (I/O) means of the respective user's computer equipment 102, including outputting information to the respective user 103 via a user output means of the equipment 102, and receiving inputs back from the respective user 103 via a user input means of the equipment 102. For example the user output means could include one or more display screens (touch or non-touch screen) for providing a visual output, one or more speakers for providing an audio output, and/or one or more haptic output devices for providing a tactile output, etc. The user input means could include for example the input array of one or more touch screens (the same or different as that/those used for the output means); one or more cursor-based devices such as mouse, trackpad or trackball; one or more microphones and speech or voice recognition algorithms for receiving a speech or vocal input; one or more gesture-based input devices for receiving the input in the form of manual or bodily gestures; or one or more mechanical buttons, switches or joysticks, etc.

Note that whilst the various functionality herein may be described as being integrated into the same client application 105, this is not necessarily limiting and instead they could be implemented in a suite of two or more distinct applications, e.g. one being a plug-in to the other or interfacing via an API (application programming interface). For instance, the functionality of the transaction engine 401 may be implemented in a separate application than the UI layer 402, or the functionality of a given module such as the transaction engine 401 could be split between more than one application. Nor is it excluded that some or all of the described functionality could be implemented at, say, the operating system layer. Where reference is made anywhere herein to a single or given application 105, or such like, it will be appreciated that this is just by way of example, and more generally the described functionality could be implemented in any form of software.

Figure 3B gives a mock-up of an example of the user interface (UI) 500 which may be rendered by the UI layer 402 of the client application 105a on Alice's equipment 102a. It will be appreciated that a similar UI may be rendered by the client 105b on Bob's equipment 102b, or that of any other party.

By way of illustration Figure 3B shows the UI 500 from Alice's perspective. The UI 500 may include one or more UI elements 501, 502, 502 rendered as distinct UI elements via the user output means.

For example, the UI elements may include one or more user-selectable elements 501 which may be, such as different on-screen buttons, or different options in a menu, or such like. The user input means is arranged to enable the user 103 (in this case Alice 103a) to select or otherwise operate one of the options, such as by clicking or touching the UI element on-screen, or speaking a name of the desired option (N.B. the term "manual" as used herein is meant only to contrast against automatic, and does not necessarily limit to the use of the hand or hands).

Alternatively or additionally, the UI elements may include one or more data entry fields 502. These data entry fields 502 are rendered via the user output means, e.g. on-screen, and the data can be entered into the fields through the user input means, e.g. a keyboard or touchscreen. Alternatively the data could be received orally for example based on speech recognition.

Alternatively or additionally, the UI elements may include one or more information elements 503 output to output information to the user. For example, the information could be rendered on screen or audibly.

It will be appreciated that the particular means of rendering the various UI elements, selecting the options and entering data is not material. The functionality of these UI elements will be discussed in more detail shortly. It will also be appreciated that the UI 500 shown in Figure 3B is only a schematized mock-up and in practice it may include one or more further UI elements, which for conciseness are not illustrated.

## *Node Software*

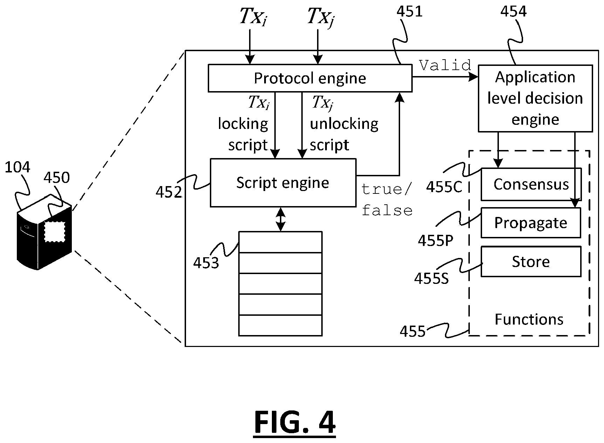

Figure 4 illustrates an example of the node software 450 that is run on each blockchain node 104 of the network 106, in the example of a UTXO- or output-based model. Note that another entity may run node software 450 without being classed as a node 104 on the network 106, i.e. without performing the actions required of a node 104. The node software 450 may contain, but is not limited to, a protocol engine 451, a script engine 452, a stack 453, an application-level decision engine 454, and a set of one or more blockchain-related functional modules 455. Each node 104 may run node software that contains, but is not limited to, all three of: a consensus module 455C (for example, proof-of-work), a propagation module 455P and a storage module 455S (for example, a database). The protocol engine 401 is typically configured to recognize the different fields of a transaction 152 and process them in accordance with the node protocol. When a transaction 152j ($Tx_j$) is received having an input pointing to an output (e.g. UTXO) of another, preceding transaction 152i ($Tx_{m-1}$), then the protocol engine 451 identifies the unlocking script in $Tx_j$ and passes it to the script engine 452. The protocol engine 451 also identifies and retrieves $Tx_i$ based on the pointer in the input of $Tx_j$. $Tx_i$ may be published on the blockchain 150, in which case the protocol engine may retrieve $Tx_i$ from a copy of a block 151 of the blockchain 150 stored at the node 104. Alternatively, $Tx_i$ may yet to have been published on the blockchain 150. In that case, the protocol engine 451 may retrieve $Tx_i$ from the ordered set 154 of unpublished transactions maintained by the node104. Either way, the script engine 451 identifies the locking script in the referenced output of $Tx_i$ and passes this to the script engine 452.

The script engine 452 thus has the locking script of $Tx_i$ and the unlocking script from the corresponding input of $Tx_j$. For example, transactions labelled $Tx_0$ and $Tx_1$ are illustrated in Figure 2, but the same could apply for any pair of transactions. The script engine 452 runs the two scripts together as discussed previously, which will include placing data onto and retrieving data from the stack 453 in accordance with the stack-based scripting language being used (e.g. Script).

By running the scripts together, the script engine 452 determines whether or not the unlocking script meets the one or more criteria defined in the locking script - i.e. does it "unlock" the output in which the locking script is included? The script engine 452 returns a result of this determination to the protocol engine 451. If the script engine 452 determines that the unlocking script does meet the one or more criteria specified in the corresponding locking script, then it returns the result "true". Otherwise it returns the result "false".

In an output-based model, the result "true" from the script engine 452 is one of the conditions for validity of the transaction. Typically there are also one or more further, protocol-level conditions evaluated by the protocol engine 451 that must be met as well; such as that the total amount of digital asset specified in the output(s) of $Tx_j$ does not exceed the total amount pointed to by its inputs, and that the pointed-to output of $Tx_i$ has not already been spent by another valid transaction. The protocol engine 451 evaluates the result from the script engine 452 together with the one or more protocol-level conditions, and only if they are all true does it validate the transaction $Tx_j$. The protocol engine 451 outputs an indication of whether the transaction is valid to the application-level decision engine 454. Only on condition that $Tx_j$ is indeed validated, the decision engine 454 may select to control both of the consensus module 455C and the propagation module 455P to perform their respective blockchain-related function in respect of $Tx_j$. This may include the consensus module 455C adding $Tx_j$ to the node's respective ordered set of transactions 154 for incorporating in a block 151, and the propagation module 455P forwarding $Tx_j$ to another blockchain node 104 in the network 106. Optionally, in embodiments the application-level decision engine 454 may apply one or more additional conditions before triggering either or both of these functions. For example, the decision engine may only select to publish the transaction on condition that the transaction is both valid and leaves enough of a transaction fee.

Note also that the terms "true" and "false" herein do not necessarily limit to returning a result represented in the form of only a single binary digit (bit), though that is certainly one possible implementation. More generally, "true" can refer to any state indicative of a successful or affirmative outcome, and "false" can refer to any state indicative of an unsuccessful or non-affirmative outcome. For instance in an account-based model, a result of "true" could be indicated by a combination of an implicit, protocol-level validation of a signature and an additional affirmative output of a smart contract (the overall result being deemed to signal true if both individual outcomes are true).

Other variants or use cases of the disclosed techniques may become apparent to the person skilled in the art once given the disclosure herein. The scope of the disclosure is not limited by the described embodiments but only by the accompanying claims.

For instance, some embodiments above have been described in terms of a bitcoin network 106, bitcoin blockchain 150 and bitcoin nodes 104. However it will be appreciated that the bitcoin blockchain is one particular example of a blockchain 150 and the above description may apply generally to any blockchain. That is, the present invention is in by no way limited to the bitcoin blockchain. More generally, any reference above to bitcoin network 106, bitcoin blockchain 150 and bitcoin nodes 104 may be replaced with reference to a blockchain network 106, blockchain 150 and blockchain node 104 respectively. The blockchain, blockchain network and/or blockchain nodes may share some or all of the described properties of the bitcoin blockchain 150, bitcoin network 106 and bitcoin nodes 104 as described above.

In some embodiments of the invention, the blockchain network 106 is the bitcoin network and bitcoin nodes 104 perform at least all of the described functions of creating, publishing, propagating and storing blocks 151 of the blockchain 150. It is not excluded that there may be other network entities (or network elements) that only perform one or some but not all of these functions. That is, a network entity may perform the function of propagating and/or storing blocks without creating and publishing blocks (recall that these entities are not considered nodes of the preferred bitcoin network 106).

In some other embodiments of the invention, the blockchain network 106 may not be the bitcoin network. In these embodiments, it is not excluded that a node may perform at least one or some but not all of the functions of creating, publishing, propagating and storing blocks 151 of the blockchain 150. For instance, on those other blockchain networks a "node" may be used to refer to a network entity that is configured to create and publish blocks 151 but not store and/or propagate those blocks 151 to other nodes.

Even more generally, any reference to the term "bitcoin node" 104 above may be replaced with the term "network entity" or "network element", wherein such an entity/element is configured to perform some or all of the roles of creating, publishing, propagating and storing blocks. The functions of such a network entity/element may be implemented in hardware in the same way described above with reference to a blockchain node 104.

### *Large volume transaction handling*

As the capacity of the network grows to accommodate larger numbers of transactions, nodes will need to adapt to handling significant flows of transactions. In some possible scenarios, the flow of new transactions may grow to tens of thousands, hundreds of thousands, even millions of transactions per second.

One of the mechanisms for addressing the challenge of large volumes and large blocks is to have nodes pre-propagate their candidate blocks prior to finding a solution. In this manner, once a block solution is found, the successful node need only send the solution details, *e.g.* the coinbase transaction, the Merkle root, the nonce, etc., instead of sending the full ordered list of TxIDs. Other nodes can then validate the solution based on the already-received ordered list of TxIDs.

To address the issue of large constant influx of new transactions, nodes may engage in dynamic transaction validation and block assembly in which the node builds successive arrays of ordered transactions, and the candidate block being mined at that node is made up of the arrays. As new arrays are completed, they are added to the candidate block. Meanwhile, the node propagates its completed arrays to other nodes. When a block solution is found, the node sends the solution details and an ordered list of array identifiers that specify the order of the arrays in the solved block. In this manner, the other nodes can quickly assemble the solved block from the arrays previously received from that node, and then engaged in validating the block solution.

It will be appreciated that in the array-based solution described above, a node will receive a number of arrays from other nodes that reflect the arrays built by those nodes and on which they are conducting mining operations. The node will therefore maintain a record of the arrays from each node. In order to speed block validation, the node may be configured to do some validation work in advance of announcement of a block solution. Block assembly and validation are potential bottlenecks to be addressed in the case of large volume transaction flow. There are certain things that block validation involves, including verifying that: (1) transaction inputs are valid (e.g. they reference an existing output and their unlocking script is valid); (2) transactions are not double-spends of outputs from previous blocks; (3) transactions are not double-spends of outputs in the current block; and (4) transactions are topologically ordered. Topological ordering mandates that a transaction in a block that spends an output from another transaction in the same block must appear later in the order, *i.e.* a child transaction must appear after its parents in the ordered set of transactions in a block. A block validation service may carry out some work during the mining phase using a transaction graph datastore or a set of array transaction databases, in order to be ready to quickly confirm topological ordering once a block solution is found by another node. In some cases, preprocessing of arrays can be delegated to separate processors, enabling horizontal scaling.

In an implementation in which a multicast network is used, a first node may broadcast an announcement of availability of a new array on the multicast network. A second node that receives the announcement may then directly contact the first node to request a copy of the array, in response to which the first node transmits the array to the second node. The second node then does the work of validating the array. The transactions in the array are likely transactions that have already been received by the second node and validated. If there are transactions identifiers in the array that it has not yet seen, then it may request copies of those transactions from the first node and it will validate those transactions.

In order to maintain a secure network and guard against malicious behaviour, blockchain nodes are designed to validate all transactions and ensure compliance with the requirements of the applicable blockchain protocol. With very large transaction throughput on the order of 100,000 to 1,000,000 transactions per second, the validation costs can be very significant. One of the potential problems is that a node may decide not to perform validations, or not all types of validation operations, and may instead rely on the validation work of other nodes, effectively treating them as "trusted" nodes. It may simply listen to the other nodes and accept transactions they have propagated as having been properly validated already. This would result in decreased security.

More specifically, suppose the network is made of three nodes linked as follows: A -- B -- C. Suppose C stops performing the signature check and relies on B to do so. The network would produce valid blocks as normal. Now, suppose B stops performing the signature check as well and relies on A to relay new transactions and validate them. The consequence would be twofold: 1) a single node would perform the transaction validation check, 2) if B creates a transaction with an invalid signature and passes it to C, C will accept it; therefore, the majority of the network would be mining invalid transactions, and the longest chain would contain invalid transactions.

There are various behaviours that a "lazy" node may adopt to avoid the costs of validation. It may skip one or more steps of validation in order to avoid validation costs. Examples include:

1. not performing script verification,

2. not verifying the existence of an output spent,

3. not checking for double spends,

4. not checking for duplicate transactions,

5. not verifying that transactions are topologically ordered in the block.

Accordingly, it would be advantageous to provide for methods and systems that ensure nodes are not able to adopt behaviours for avoiding validation of transactions and arrays and blocks.

### Array obfuscation

In accordance with one aspect of the present application, a proposed mechanism for dealing with "lazy" node behaviour is for nodes to monitor the activity of other nodes through tracking communications sent by other nodes and, in particular, communications propagating new valid transactions. If, over time, a node is identified as sending no new valid transactions, or very few new valid transactions, then the node may be identified as a passive node and excluded from the blockchain network.

In accordance with another aspect of the present application, nodes are configured to prevent lazy behaviour by other node by periodically or intermittently propagating an invalid transaction and including the invalid transaction in an array of transactions pre-distributed to other nodes. A node that receives the invalid transaction and/or the array with the invalid transaction determines that the transaction is invalid if it performs the requisite validation operations. Rather than simply rejecting the transaction and/or labelling the sending node as malicious, it transmits a peer-to-peer message to the sending node regarding the invalid transaction. The sending node sends a response message with a valid replacement transaction that the receiving node then uses in place of the invalid transaction in the array of transactions to realize the actual array of transactions. Advantageously, the replacement transaction is provided during the mining phase, thereby enabling the receiving node to validate it and the array prior to announcement of a block solution, thereby preserving the advantages of pre-distributing arrays of transactions between nodes.

In yet a further aspect of the present application, instead of waiting for receiving nodes to ask about invalid transactions, the sending node provides a commit message prior to the mining phase or early in the mining phase. The commit message includes a hashed identifier for the invalid transaction and a replacement transaction. Later, during the mining phase, when the receiving node receives an invalid transaction or an invalid array containing an invalid transaction, it hashes the transaction identifier of the invalid transaction and determines whether the hash result matches with any commit messages previously received. If it finds a match, then it uses the corresponding replacement transaction instead of the invalid transaction to create a valid array of transactions.

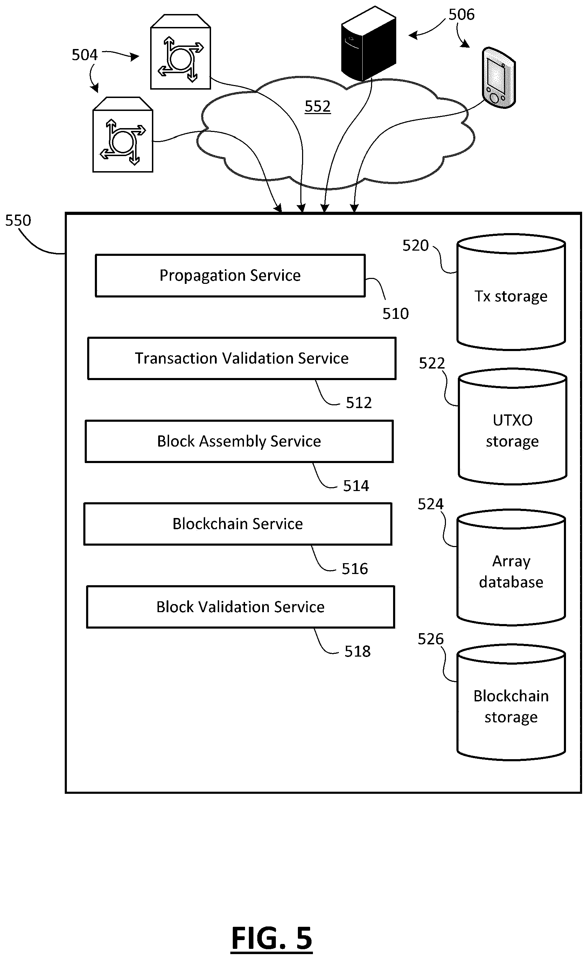

Reference will now be made to Figure 5, which diagrammatically shows a simplified example blockchain node 550 for processing a large volume of blockchain transactions. In this example, the node 550 is shown as a single device; however, it will be appreciated that the node 550 may be implemented using one or a plurality of computing devices. The computing devices include one or more processors, memory, internal communications busses, and external network communication subsystems, among other systems.

The blockchain node 550 is configured for communication over one or more computer networks 552. The computer networks 552 may include a peer-to-peer computer network, such as a blockchain network interconnecting blockchain nodes, such as other blockchain nodes 504. The computer networks 552 may include public and/or private computing networks, including the Internet. In some cases, the computer networks 552 may support multicast communications. The computer networks 552 may enable communications from user devices 506, such as end user computing or edge devices that may generate and send blockchain transactions or queries. The user devices may include mobile devices, point-of-sale devices, merchant computing systems, e-commerce platforms, financial services platforms, payment processing systems, and other such systems or devices.

The blockchain node 550 may implement a number of services, including a propagation service 510, a transaction validation service 512, a block assembly service 514, a blockchain service 516 and a block validation service 518. Some or all of these services may be horizontally scalable.

In addition, the blockchain node 550 may maintain or have access to certain stored data. The data may be stored in database format or in other data structures depending on the implementation. The stored data may include, for example, transaction storage 520, UTXO storage 522, one or more array databases 524, and a blockchain storage 526.

The propagation service 510 manages network communications for the blockchain node 550. It may listen for transactions incoming via a IPv6 multicast network, for example. It may perform some gating on incoming transactions, such as basic validity checks like ensuring the transaction is formatted correctly, has non-zero inputs and outputs, and other such basic validity checks.

The transaction validation service 512 may validate a transaction according to the rules of the applicable blockchain protocol. It may, for example, verify that inputs consumed in the transaction are valid unspent outputs of a confirmed or unconfirmed transaction, e.g. a UTXO. The transaction validation service 512 may verify that a block is valid in part through referencing the UTXO storage 522 to verify that inputs are unspent. Validated transactions are passed to the block assembly service 514.

The transaction validation service 512 or a sub-service may mark any inputs to the transactions as spent in the UTXO storage 522. The validated transaction may be stored in the transaction storage 520.

The block assembly service 514 is responsible for creating new candidate blocks for miners associated with the blockchain node 550. The block assembly service 514 receives a stream or flow of validated transactions and assembles them into arrays of ordered transaction identifiers. As an array is completed, its Merkle root is calculated, it is added to the current candidate block, the Merkle root of the candidate block is updated, and the candidate block header is pushed to the miners. A newly-completed array is announced to other blockchain nodes over the computer networks 552.

The blockchain service 516 manages the block headers and arrays in a block and records block data in the blockchain storage 526. In some cases, the blockchain storage 526 may be a complete copy of the current blockchain. In some cases, the blockchain storage 526 may be metadata, such as block headers and array data including TxIDs, but excluding full transaction data.

In some cases, the array discussed above may be referred to as a sub-tree since its transaction identifiers form a portion of the total consolidated ordered list of transaction identifiers that may be in a candidate block, such that the transaction identifiers from the array may be used to find a part of the Merkle tree for the candidate block, *i.e.* a "sub-tree". Each array has a unique array identifier, or "sub-tree identifier", that is sent with the array when propagated to other blockchain nodes 504 over the blockchain network. The other nodes, having determined that they have seen and validated all transactions in the array may then store the array identifier in memory in association with the array data. Likewise, when the blockchain node 550 receives arrays from other blockchain nodes 504 it determines whether it has received and validated all the transactions listed in the array by transaction identifier and it then validates the Merkle root of the array and stores the array identifier in memory in association with the array data within the array database 524. The arrays are stored in association with an identifier for the node that sent them. That is, the array database 524 may include a set of arrays associated with a particular node identifier unique to the node that created and propagated those arrays.

In the examples below, the block validation service 518 serves to verify the validity of a block announced by one of the other blockchain nodes 504. It listens for arrays communicated by other blockchain nodes 504 and carries out functions to compactly store the array data in a manner that enables fast and efficient validation of a block, if a solution is found. A block announcement from one of the other nodes 504 includes block header data and an ordered list of array identifiers from which the node can determine the block contents, provided it has already received the arrays corresponding to the array identifiers. The block solution may be referred to herein as a newly-solved block.

As noted above, to avoid the processing costs associated with conducting all the validation operations for every transaction received, a node may be configured to only carry out some of the operations or none of the operations, effectively relying on the integrity of other nodes in the network for validation of transactions.

In some implementations, nodes may use IP multicast for communicating transactions. Any node may subscribe to the multicast address and listen for transactions. Since the multicast address is public, anyone can communicate transactions, including malicious users transmitting invalid transactions. To avoid receiving invalid transactions, the dishonest node might listen for a specific source IP address or other identifier, known to belong to a trusted node that communicates only valid transactions. Since anyone can listen to the multicast address, it may not be possible to detect the dishonest node and exclude it from the network.

In some implementations, nodes may use IP unicast for communicating transactions. In that case, the dishonest node has to establish a direct connection to the trusted node and listen for transactions. The dishonest node plays a passive role, by only listening to transactions and never or rarely validating and relaying any transactions. As explained in the next section, it may be possible to detect this behaviour and exclude passive, dishonest nodes from the node network.

In a first simple example, the lazy node has a single connection to a trusted node. In this case, the trusted node is able to detect the lazy behaviour because no (or very few) transactions are received from the node, which indicates the lazy node is simply relying on the validated transactions supplied by the trusted node. After some time, the trusted node can remove the lazy node from its list of peers, thereby excluding it from the network.

To avoid being detected as a lazy node, the lazy node may establish connections with two or more trusted nodes. If the lazy node sits between two trusted nodes it may relay validated transactions from one node to the other, thereby appearing as though the lazy node is validating and propagating transactions instead of simply relaying the received transactions without validating them first. To prevent this, the network could ideally form a complete graph. Nodes could then detect the lazy node by checking that the transactions received from it are in fact not new and are always ones already sent by another node. Nevertheless, establishing a complete graph is not scalable in terms of network bandwidth. Instead, nodes may periodically switch the other nodes they are connected to in order to detect lazy nodes. It should be noted that if there is too much difference between the speed of the links between nodes, then it might be difficult to know which node sent and validated new transactions.

In another possible implementation, the lazy node may establish a connection with external users. In such a case, it may relay new transactions into the network from external sources. If it does not validate them, then it may be detected as a lazy node if any of the transactions are determined to be invalid by other nodes. However, it could choose to validate externally-sourced new transactions in order to avoid detection. It may also restrict the number of external user transactions that it passes to the network so that it only has to validate and send a small number of transactions, pretending to have limited connectivity to external users.

One mechanism for detecting and excluding lazy nodes is for each node to maintain a record of the rate at which new, valid transactions are received from each other node. If that rate is above a threshold level, then the node is considered "trusted". If that rate falls below the threshold level, then the node may be considered "suspect". If that rate is below the threshold level for more than a maximum amount of time, then the suspect node may be excluded from the network. In order to prevent lazy nodes from mimicking a trusted node by sitting between two trusted nodes and acting as a relay of validated transactions, the nodes may be configured to periodically switch which nodes they are connected to, even though the resulting connections may be less than ideal.

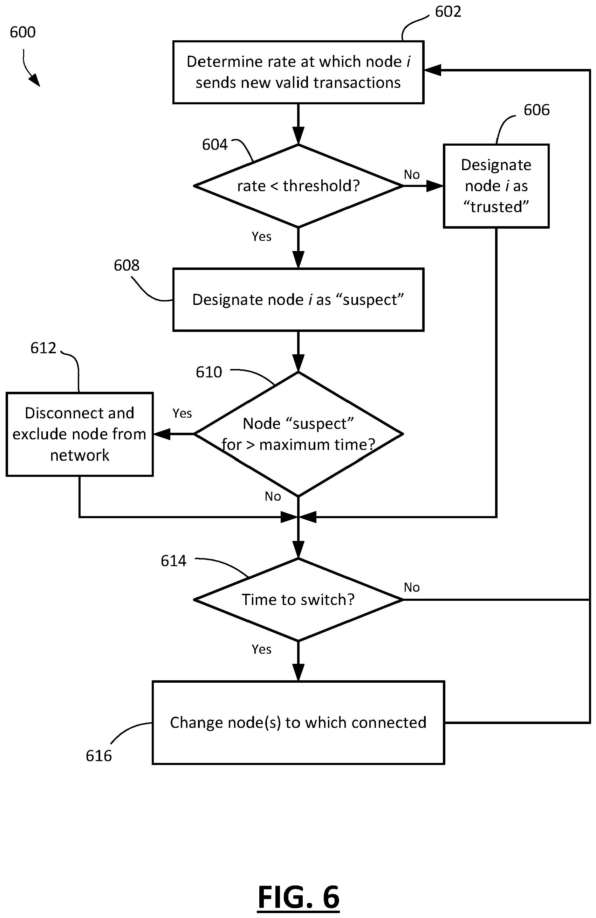

Figure 6 shows, in flowchart form, one example method 600 of detecting and excluding passive nodes. The method 600 may be implemented by a blockchain node operating in a blockchain network and having a connection to at least one other blockchain node in the network. In this example, transactions are propagated from node-to-node using unicast communications.

In operation 602, the blockchain node determines the rate at which node $i$, where $i$ is an index, sends new valid transactions. It will be appreciated that if node $i$ is sending invalid transactions the blockchain node may have mechanisms for identifying node $i$ as untrustworthy and sending an alert to other nodes in the network and excluding node $i$ from the network.

In operation 604, the blockchain node determines whether the rate is less than a minimum level. That is, whether node $i$ is sending valid transactions as less than a minimum rate. If not, then the blockchain node may designate or categorize node $i$ as "trusted". However, if the rate of valid transactions from node $i$ is below the minimum rate, then in operation 608 the blockchain node may identify node $i$ as "suspect", meaning it may be a passive node that is avoiding validation operations.

In operation 610, the blockchain node determines whether node $i$ has been identified as "suspect" for more than a maximum amount of time. This avoid excluding nodes that go through a short period of reduced activity for one or more non-malicious reasons, such as bandwidth issues, unexpected downtime or maintenance, or other factors that may affect the valid transaction propagation rate for a short period of time. However, if the node has been identified as suspect and has had that status for more than the maximum amount of time, then in operation 612, the blockchain node disconnects from node $i$ and takes action to exclude it from the network. This may include adding it to a list or registry of excluded nodes, sending an alert to other nodes in the network, or other such actions.

As noted above, in some cases a passive node may mimic the behaviour of an active node by relaying transactions received from one node to another node in a case where it sits between two active nodes in the network. To address this risk, the nodes may be configured to change the nodes to which they are connected from time-to-time. Accordingly, in operation 614, the blockchain node may determines whether it has reached a switching time. If so, then in operation 616, it drops its connection to at least one other node and establishes a connection to a node to which it was not immediately previously connected, thereby changing the network configuration for unicast communications.

Another example mechanism for discouraging or preventing nodes from avoiding validation operations by relying on other nodes to do the validations is to intentionally "poison" a transaction and/or array such that if nodes were to rely on its validity without performing validity checks, they risk performing mining work on blocks that are going to be rejected for including invalid transactions. Such a mechanism was described by in EP Publication 4122153. In that example, a candidate block that is pre-distributed to other nodes while the mining is ongoing is modified to include an invalid transaction. If a block solution is found by the mining node, then it identifies the invalid transaction and provides a replacement transaction. In some cases, that information is circulated with the candidate block in encrypted form and the decryption key is provided if a block solution is found.

This mechanism has low overhead, but also prevents the receiving nodes from fixing the array(s) and pre-validating the arrays prior to discovery of a block solution, which undermines the advantages of pre-distributing arrays to some degree. It is also important that the mining node control the outputs of the poisoned and replacement transaction since there could otherwise be double spend and invalidation risks that arise if a child transaction spending the replacement transaction output appears in another array. From the point of view of the other nodes, the child transaction would appear to be invalid for spending an output that does not appear topologically earlier one of the arrays.

In the context of this earlier-described solution involving the sending of poisoned arrays, a receiving node that performs validity checks would identify that the poisoned transaction is an invalid transaction. However, in some implementations the receiving node may not necessarily label the sending node as a malicious or rogue node unless the quantity or frequency of invalid transactions sent exceeds some maximum. Instead, the receiving node would wait to see if the sending node finds a block solution. If the block solution provides a replacement transaction for the invalid transaction, then the receiving nodes are made aware that the invalid transaction was intentionally inserted as a poisoned transaction and the node is not a malicious or rogue node. If the block solution does not correct the invalid transaction, then the block solution will be rejected and the sending node may be identified as a malicious or rogue node.

Poisoned transactions are transactions that are invalid in some way. This may include, for example:

- one of the unlocking scripts is invalid (e.g. contains an invalid signature),

- the referenced outpoint does not exist in the UTXO set,

- the transaction is a double spend,

- the transaction is a duplicate,

- the format of the transaction is invalid,

- the sum of the input values is less than the sum of the output values,

- either the list of inputs or outputs is empty, etc...

Poisoned transactions are broadcast to the network like regular transactions. They ensure that nodes systematically validate all transactions they receive. Not doing so would introduce the risk of having invalid transactions in their candidate block, which potentially results in a huge waste of resources. The severity of this risk makes it so that poisoned transactions do not need to be broadcast too frequently. Accordingly, for 'honest' nodes the introduction of poisoned transactions in the network has limited impact on their operations.

By varying the way poisoned transactions are created, nodes are forced to perform the full transaction validation process to be able to detect all poisoned transactions.

It is also important to broadcast poisoned transactions (i.e. the full transaction data) to the network as though it is a regular transaction. If poisoned transactions were only included in arrays, then a dishonest node could identify them simply by looking at which transactions in the arrays have not been broadcast to the network.

External users of the network are not supposed to send poisoned transactions, only nodes are. Therefore, if an invalid transaction is received from an external user, a receiving node that identifies it as coming from an external user must reject the transaction and not propagate it further. This is important to protect the network from Denial-of-Service (DoS) attacks, in which users try to flood the network with invalid transactions.

In another implementation, rather than waiting for a block solution the receiving nodes may be configured to resolve whether invalid transactions are intentional or not during the mining phase. This enables them to take corrective action to replace the invalid transaction with a valid replacement transaction and to therefore perform the pre-validation of arrays that enables efficient validation of an eventual block solution.

In one aspect, the present application provides a process in which a sending node propagates an invalid transaction to other nodes, and includes that invalid transaction (i.e. the transaction identifier (TxID)) in an array that it sends to the other nodes. The actual valid array includes a valid replacement transaction instead of the invalid transaction. The actual valid array represents an ordered set transactions included in the candidate block actually being mined at the sending node. Nevertheless, the sending node propagates the invalid array containing the invalid transaction.

The receiving nodes that receive the invalid transaction perform validation operations and detect that the transaction is invalid. Instead of determining that the sending node is malicious and identifying it as a rogue node, the receiving nodes each individually message the sending node identifying the detected invalid transaction. The message may be a peer-to-peer message directly to the sending node. The sending node, upon receiving a peer-to-peer message from one of the receiving nodes that identifies the invalid transaction, generates and sends a response message providing or identifying the replacement transaction. This enables the receiving nodes to "fix" the invalid array by replacing the invalid transaction with the replacement transaction. The receiving nodes can then carry out any requisite array validation operations, such as the pre-calculation of array Merkle roots and the like, to enable the nodes to quickly validate a block solution should one be discovered by the sending node.

In some cases, the sending node may create an invalid array through mechanisms other than inclusion of an invalid transaction. For example, the invalid array may be created through an invalid ordering of transactions that would fail a topological ordering check. When a receiving node messages the sending node regarding the detected validation failure of the array, the sending node may send the correct ordering of the transactions to fix the array.

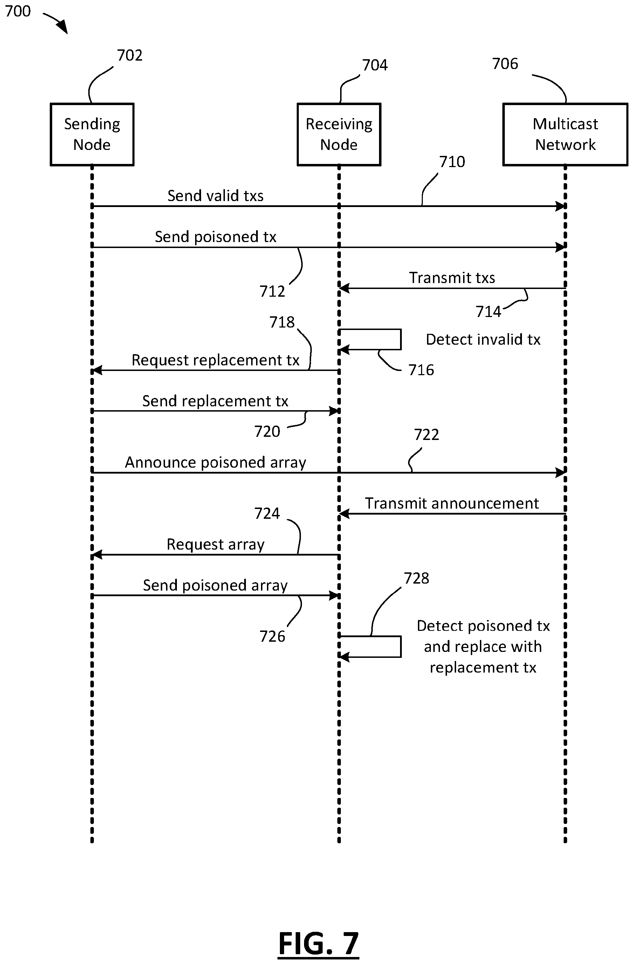

Reference is now made to Figure 7, which shows an example signal diagram 700 illustrating a method of constructing and resolving poisoned arrays. The diagram 700 illustrates communications between a sending node 702 and a receiving node 704, including the use of a multicast network 706.

In the normal course, the sending node 702 broadcasts valid transactions to other nodes via the multicast network 706 including the receiving node 704, as indicated by operation 710. In operation 712, it further broadcasts a poisoned transaction. All of those transactions are received by the receiving node 704 from the multicast network 706, as indicated by operation 714.

The receiving node 704 validates the incoming transactions as they are received, for example using a Transaction Validation Service. In the course of validating the transactions, it detects or determines that the poisoned transaction is an invalid transaction, as indicated by operation 716.

In response to detecting the invalid transaction, the receiving node 704 identifies the origin of the invalid transaction, *i.e.* the sending node 702, and prepares and sends a message 718 to the sending node 702. The message 718 may be a direct peer-to-peer message and may identify the invalid transaction, perhaps by its transaction identifier TxID. The message 718 may be encrypted to avoid tipping off any listening nodes to which transaction was identified as invalid.

In response to the message 718, the sending node 702 sends a response message 720 providing an identifier of the replacement transaction. The identifier may be the TxID of the replacement transaction. The receiving node 704 may then store the association between the invalid transaction (or its TxID) and the replacement transaction (or its TxID).

At some point, the sending node 702 assembles an array and chooses to replace one of the valid transactions in the array with the poisoned transaction, thereby creating a poisoned array. It broadcasts the availability of the new array using the multicast network 706, as indicated by operation 722. That announcement is relayed to all the nodes subscribed to the multicast network 706, including the receiving node 704. The receiving node 704 then requests the new array from the sending node 702 in operation 724 and receives the array in operation 726.

The receiving node 704 carries out the operations associated with validating the array, including confirming that it has received and validated all the transactions listed in the array. When it identifies the TxID of the invalid (poisoned) transaction it knows from its stored association that the TxID is a known poisoned transaction that has an identified replacement. In operation 728, the receiving node 704 replaces the invalid transaction with the replacement transaction (in particular the TxID of the invalid transaction is replaced with the TxID of the replacement transaction within the ordered set of transaction identifiers that makes up the array), thereby converting the invalid array into a valid or repaired array. It may then complete validation of the repaired array.

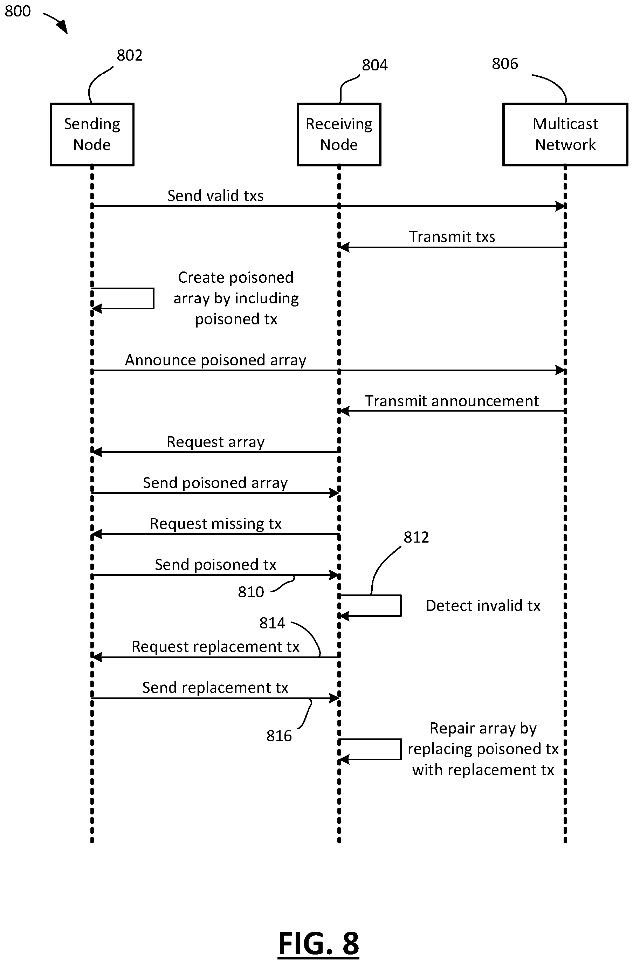

Figure 8 shows another signal diagram 800 illustrating another example method of constructing and resolving poisoned arrays. The diagram 800 illustrates communications between a sending node 802 and a receiving node 804, including the use of a multicast network 806. In this example, the receiving node 804 receives the poisoned array prior to receiving the poisoned transaction. When a node receives an array that includes a transaction it has not previously seen, it is configured to request a copy directly from the node that sent the array. That same process occurs in this situation.

As will be noted from the signal diagram 800, the sending node 802 announces availability of a new array that it created and that that intentionally includes an invalid transaction to result in a poisoned array. It provides the poisoned array to the receiving node 804 in response to a request for it from the receiving node.

The receiving node 804 detects that it has not received and validated one or more of the transactions listed in the array and, thus, it sends a request to the sending node for copies of the one or more missing transactions. One of these is the poisoned transaction in this example. Accordingly, the sending node 802 sends the receiving node 804 a copy of the poisoned transaction in operation 810. The receiving node 804 passes the received transaction to its transaction validation service which determines that the transaction is invalid and, thus, the array is invalid in operation 812.

In response to detection of the invalid transaction, the receiving node 804 does not simply reject the transaction and label the sending node 802 as a malicious actor; rather, it sends a request message 814 to the sending node 802 identifying the invalid transaction and requesting a replacement. In response, the sending node 802 provides the replacement transaction in a response message 816. As with the process described in Figure 7, the receiving node 804 may then replace the invalid transaction with the replacement transaction in order to repair the array and it can then complete the validation of the array. If the receiving node 804 had not previously received and validated then replacement transaction, then it does so prior to the act of replacement.

The messaging directly between the receiving node 804 and the sending node 802 regarding the identified invalid transaction and the replacement transaction may employ encryption.

Nodes should also use and broadcast other nodes' poisoned and replacement transactions as if they were originating from them. This includes constructing poisoned arrays containing the poisoned transactions received from other nodes. This prevents lazy nodes from identifying poisoned transactions simply by checking which transactions were included in the array of a single node.

Advantageously, these processes of requesting the replacement transaction directly from the sending node using a peer-to-peer message does not require that the sending node control the outputs of the poisoned and replacement transactions. Because replacement transactions are revealed to nodes as soon as they detect the invalid transaction, arrays can include child transactions without causing validity issues that would arise if the replacement transactions are only identified following discovery of a block solution.

It will be appreciated that a node should not broadcast poisoned transactions too often, as this may result in the node being reported as malicious. If a node is found to send too many invalid transactions in a short span of time, then other nodes may not try to get the replacement transactions but may immediately raise an alert and exclude the node from the network. In some implementations, the nodes may be configured to regularly broadcast poisoned transactions to the network at a predetermined rate. The rate may be limited to one poisoned transaction every 10 minutes in the whole network. In other words, nodes may estimate the total number of nodes in the network and broadcast a poisoned transaction with a probability 1/N during each mining round, with N being the estimated number of nodes in the network.

In the examples above, the receiving node that identifies an invalid transaction that is received via the multicast network may identify the sending node from the source IPv6 address of the packets. As an alternative, instead of immediately requesting a replacement transaction when receiving an invalid transaction, nodes can put the transaction in a special pool. When receiving an array with a transaction contained in the pool, the node may then request the replacement transaction from the node that sent the array. This alternative does not require identifying the sender of a transaction in the IPv6 multicast network. However, it has the negative effect that no alerts are raised if nodes receive a double-spend transaction because it would take time to differentiate a malicious double-spend transaction from a poisoned double-spend transaction.

One way a lazy node could identify poisoned transactions is as follows: whenever it receives a transaction, the lazy node propagates the transaction again to the multicast network. If it receives a request for a replacement transaction from another node, then it determines that the transaction is poisoned. To mitigate this attack, nodes should request the replacement transaction upon detection of an invalid transaction only once, that is, when it is first sent by a trusted node. If a lazy node tries to relay a poisoned transaction that was already sent by another node and identified as invalid, then other nodes should not request the replacement transaction again.

In yet another aspect, the present application provides an alternative mechanism for providing the replacement transaction to a poisoned transaction. Instead of having each node that detects the invalid transaction send and receive messages with the sending node regarding the invalid transaction and seeking its replacement, the sending node pre-distributes a time-locked message that reveals the replacement transaction once the invalid transaction is identified. In one example, the time-locked message is a commit message of the form:

$$\left(\text{COMMIT}\left(txID_{i,poison}\right), blockHeight, T, tx_{i,replacement}\right)$$

Where $txID_{i,poison}$ is the transaction identifier of the invalid (poisoned) transaction, *blockheight* is the applicable height at which the mining is being carried out, *i* is an index identifying the sending node, $tx_{i,replacement}$ is the replacement transaction, and *T* is a complexity parameter. The value of COMMIT($txID_{i,poison}$) is the TxID of the invalid transaction hashed *T* times. In the case of the hash function SHA-256, the test being carried out may be described as:

$$\text{COMMIT}\left(txID_{i,poison}\right) = SHA256^{T}\left(txID_{i,poison}\right)$$

That is, once the transaction identifier for the poisoned transaction is known to a receiving node, it hashes that TxID *T* times and, if it matches the value in a commit message, then the receiving node can associate that poisoned transaction with the replacement transaction specified in that commit message. If a node finds an invalid transaction and its hash does not equate to any of the commit messages, then it knows the transaction is not a poisoned transaction but is a malicious transaction and an alert may be raised.

In some cases, instead of the replacement transaction, the commit message may include the TxID of the replacement transaction.

In the examples herein, the computation of the commit value involves hashing but in some implementations a mechanism other than hashing may be used. For example, computation of a public key from a private key (represented by the TxID) may be used instead of a hash operation. Other such one-way computations may be used in place of a hash operation.

The commit messages may be broadcast from sending nodes to the other nodes via the multicast network prior to start of a mining phase in some cases.

Ideally, receiving nodes include the poisoned transaction sent by other nodes in their own arrays. This may be important to ensure that a lazy node cannot identify a poisoned transaction simply by identifying transactions that are only included in the array of a single node.

The complexity parameter *T* determines the time needed by a node to identify if a transaction is poisoned. A lazy node that does not want to validate transactions can detect the poisoned transaction by hashing the txIDs of all transactions. The choice of *T* determines the resistance of this solution against such an attack. Because iterating a hash function is an inherently sequential problem, a lazy node does not get any advantage in using parallel machines to speed up checking if a transaction is poisoned. However, a lazy node could use multiple machines, each working on a different txID, to speed up identifying the poisoned transaction out of the set of transactions received. Therefore, the choice of *T* may be made so that the number of processors required to identify the poisoned transaction has a prohibitive cost.

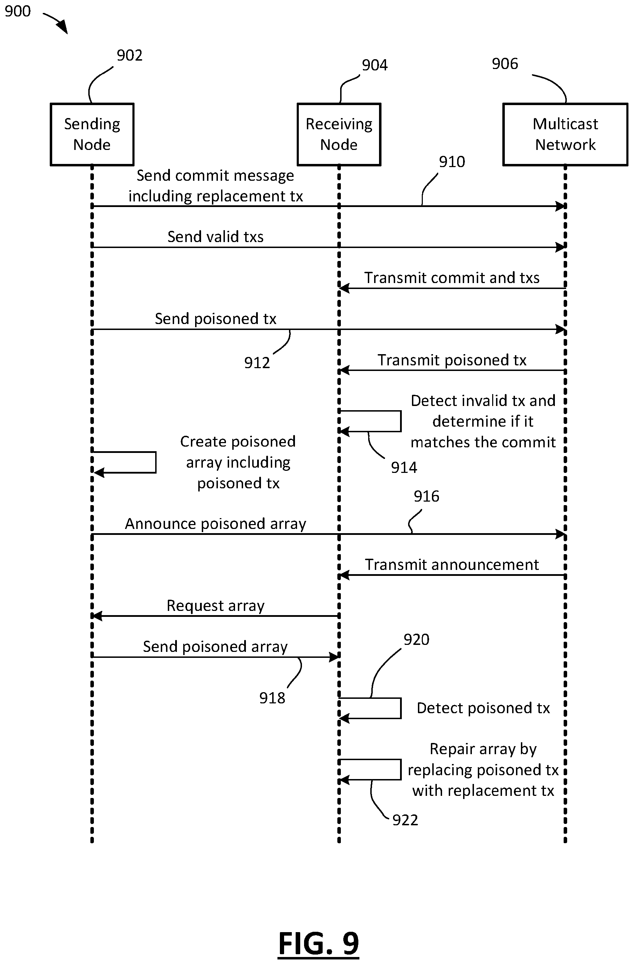

Reference is now made to Figure 9, which shows an example signal diagram 900 illustrating a further method of constructing and resolving poisoned arrays. The diagram 900 illustrates communications between a sending node 902 and a receiving node 904, including the use of a multicast network 906.

The sending node 902 broadcasts a commit message 910 using the multicast network 906. As detailed above, the commit message is a message that provides a replacement transaction and requires the identifier for the invalid transaction in order to solve the commit. In the example given above, the commit message includes a commit value found by hashing the invalid transaction TxID *T* times. Nodes receive the commit messages from one or more other nodes along with transactions broadcast on the multicast network 906. The commit message(s) may be sent prior to initiation of the mining phase (e.g. just after broadcast of a valid solution) or relatively quickly after initiation of the mining phase.

At some point during the mining phase, the sending node 902 broadcasts a poisoned transaction, as indicated by operation 912. The receiving node 904 detects that the poisoned transaction is invalid by performing validity checks and then, based on having detected an invalid transaction, it determines whether the invalid transaction matches to one of the commits previously circulated, as indicated by operation 914. In one example, the receiving node 904 hashes the TxID of the poisoned transaction the requisite number of times and compares the resulting value with the values of one or more commit messages. If it identifies a match between the resulting value of the hashed poisoned transaction identifier and the commit value in one of the commit messages, then it knows the invalid transaction is an intentional poisoned transaction and not a malicious transaction and that the replacement transaction corresponds to the poisoned transaction. It may store that association between the invalid poisoned transaction and the replacement transaction in memory.

The sending node 902, at some later point during the mining phase, generates an array providing an ordered set of transactions and poisons the array by including the poisoned transaction in place of the replacement transaction. The fixed array that uses the replacement transaction instead of the poisoned transaction represents at least a portion of the actual candidate block being mined by the sending node 902. The sending node 902 announces availability of the new (poisoned) array via the multicast network 906 as indicated by operation 916. The receiving node 904 then requests the newly-available array from the sending node 902, which sends the receiving node 904 the poisoned array in operation 918.

In operation 920, the receiving node 904 identifies that the array contains an invalid transaction based on identifying the TxID for the previously-detected invalid transaction in the ordered set of transaction identifiers that make up the array. Using the stored association, in operation 922, the receiving node 904 fixes or repairs the poisoned array to create a repaired array by replacing the poisoned transaction with the replacement transaction. It may then carry out the remaining validity checks for the repaired array.

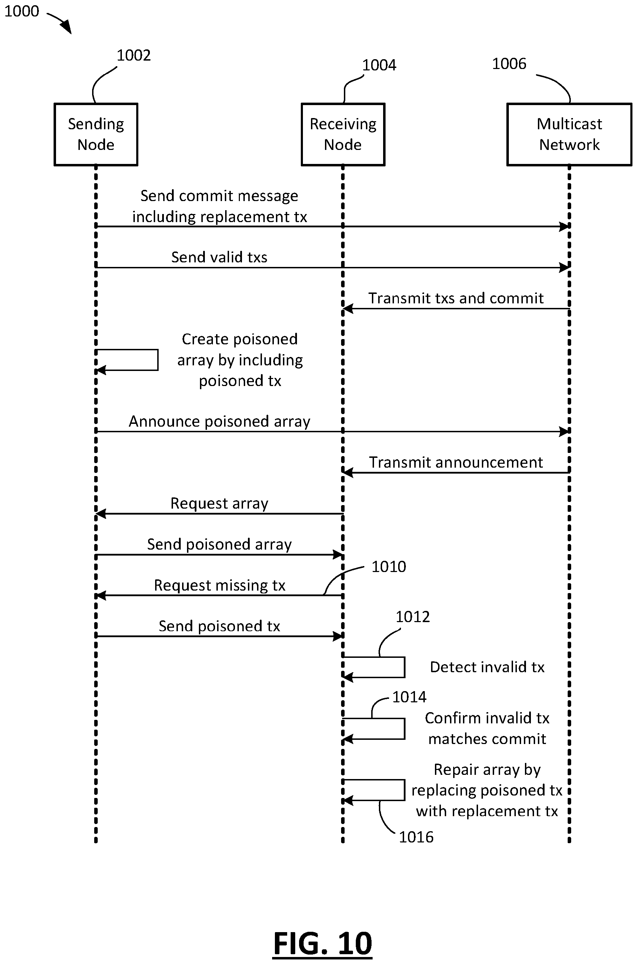

Figure 10 shows a similar signal diagram 1000 illustrating another method of constructing and resolving poisoned arrays. The diagram 1000 illustrates communications between a sending node 1002 and a receiving node 1004, including the use of a multicast network 1006. The diagram 1000 relates to the situation in which the poisoned array is received by the receiving node 1004 prior to it receiving the poisoned transaction over the multicast network 1006.

The receiving node 1004 identifies that the poisoned array contains a transaction that it has not received and validated and, as a result, sends a request message 1010 to the sending node 1002 requesting a copy of the missing transaction. On receiving the missing transaction, the receiving node 1004 passes it to its transaction verification service, which determines that the transaction is invalid, as indicated by operation 1012. The receiving node 1004 then, in operation 1014, determines whether the invalid transaction matches with any of the commits previously received. In this example, the receiving node 1004 hashes the TxID of the invalid transaction the required number of times and compares the resulting value with the values specified in the commit messages. If a match is found, then the receiving node 1004 replaces the invalid transaction in the array with the replacement transaction specified in the commit message, thereby creating a valid repaired array, as indicated by operation 1016.

Having all nodes broadcasting poisoned transactions at every mining round could result in a lot of poisoned transactions being broadcast on the network. In order to reduce the impact of poisoned transactions on nodes' operations, in some implementations nodes may broadcast a poisoned transaction with a probability $1/N$ during each mining round, with $N$ being the estimated number of nodes in the network.

In such an implementation, nodes may broadcast a commit message even if they are not broadcasting a poisoned transaction, as otherwise a lazy node could simply listen for transactions coming from the node which has broadcast the commit, and test all transactions received from that node against the commit to identify the poisoned one. If we assume that every node broadcasts the same number of transactions, the number of machines required to identify poisoned transactions would be divided by the number of nodes in the network.

In one alternative, the last node to have found a block is responsible for broadcasting the commit message and poisoned transaction. As stated above, if a single node broadcasts the commit, then a lazy node can more quickly identify the poisoned transaction. To counteract this, the node should send its poisoned transaction to a random node in the network. The latter will be responsible for broadcasting the poisoned transaction to the IPv6 multicast network. The advantage is that a lazy node then does not know which node will broadcast the poisoned transaction. Therefore, it cannot speed up the detection of the poisoned transaction by testing transactions coming from a specific node. This alternative has the advantage of reducing the load on the network as a single commit message is broadcast to nodes at every mining round.

In one variation, instead of broadcasting the commit message to the network, the winning node may include the commit in the block it has mined, *e.g.* in the coinbase transaction. This may complicate the creation of a poisoned transaction in case the poisoned transaction is created as a double-spend transaction. Indeed, it would imply knowing in advance which UTXO will be spent during the next mining round. One way this can be solved is by the miner preparing two transactions: a valid transaction and a poisoned transaction that is a double-spending version of the first one. It could include a commit of the poisoned transaction in the block and broadcast the two transactions in the next mining round. Another solution consists of defining the commit to be on a piece of transaction data rather than on the txID, such as the hash of the first transaction output. In this way, the node can choose the outpoint of the poisoned transaction during the next mining round without invalidating the commit. However, because outputs are not unique in the blockchain, this could lead to the collisions of transactions with the commit.

In yet another variation, instead of having the individual nodes take responsibility for broadcasting commits and creating poisoned transactions, a dedicated node may be tasked with creating a poisoned transaction and broadcasting the commit message. It then sends the poisoned transaction to a randomly selected one of the nodes. The node confirms that the received poisoned transaction matches the commit and that it is an invalid transaction, and then broadcasts it as a regular transaction and incorporates it into an array. Other nodes that receive the invalid transaction similarly identify it as matching the commit and include it in their own poisoned arrays.

Even if commits are not created right at the beginning of the mining round, they can still be created within a very short delay.

As an alternative, the commit could also be computed as $SHA256^T(txID_{i,poison}, txID_{i,replacement})$ with $txID_{i,replacement}$ the transaction identifier of the replacement transaction sent by node $i$. When checking if a transaction is poisoned, the node can be convinced that the transaction is indeed poisoned, and it would give extra confidence that the replacement transaction received is indeed the one associated with the poisoned transaction.

Many of the above-described methods may be implemented using one or more computing devices each having one or more processing units, memory, and communications subsystems. Suitable software stored in memory and executable by the one or more processing units may configure the processing units to carry out the described functions or operations. In some cases, a microservices architecture may be used to implement some or all of the methods. While the operations described above are set out in a linear format, it will be appreciated that some implementations may at least partly parallelize some of the operations and/or carry them out in a different order without materially impacting operation of the methods.

The various embodiments presented above are merely examples and are in no way meant to limit the scope of this application. Variations of the innovations described herein will be apparent to persons of ordinary skill in the art, such variations being within the intended scope of the present application. In particular, features from one or more of the above-described example embodiments may be selected to create alternative example embodiments including a subcombination of features which may not be explicitly described above. In addition, features from one or more of the above-described example embodiments may be selected and combined to create alternative example embodiments including a combination of features which may not be explicitly described above. Features suitable for such combinations and sub-combinations would be readily apparent to persons skilled in the art upon review of the present application as a whole. The subject matter described herein and in the recited claims intends to cover and embrace all suitable changes in technology.

**Claims**

1. A method of obfuscating arrays of blockchain transactions by a sending node, the method comprising:

   propagating an invalid transaction on a blockchain network;
   generating an array of transactions forming at least part of a candidate block being mined by the sending node;
   obfuscating the array of transactions by replacing a valid transaction in the array with the invalid transaction to create an invalid array of transactions;
   transmitting the invalid array of transactions that includes the invalid transaction to receiving nodes in the blockchain network; and
   providing the valid transaction to one of the receiving nodes to enable said one of the receiving nodes to replace the invalid transaction with the valid transaction, once said one of the receiving nodes has detected invalidity of the invalid transaction, so as to convert the invalid array of transactions into the array of transactions during a mining phase and prior to discovery of a block solution.

2. The method of claim 1, wherein providing includes:

   receiving a peer-to-peer message from said one of the receiving nodes identifying the invalid transaction; and, in response, sending a response message to said one of the receiving nodes with the valid transaction to enable said one of the receiving nodes to replace the invalid transaction with the valid transaction so as to convert the invalid array of transactions into the array of transactions.

3. The method of claim 2, wherein the propagating, the generating, the obfuscating, the transmitting, the receiving, and the sending all occur during the mining phase prior to discovery of the block solution.

4. The method of claim 2 or claim 3, wherein the peer-to-peer message is an encrypted message.

5. The method of claim 1, wherein providing includes broadcasting a commit message containing a hashed identifier of the invalid transaction and an identifier of the valid transaction, and wherein, during the mining phase, said one of the receiving nodes is to determine that the invalid transaction is invalid, hash an identifier of the invalid transaction to obtain a hash result, and match the hash result to the hashed identifier in the commit message to determine that the invalid transaction can be replaced by the valid transaction to fix the array of transactions.

6. The method of claim 5, wherein the commit message includes a complexity parameter indicating a number of times the identifier of the invalid transaction is to be hashed to obtain the hash result.

7. A method of validating arrays of blockchain transactions by a receiving node, the method comprising:

   receiving a valid transaction and an invalid transaction over a blockchain network;
   receiving an invalid array of transactions purporting to be at least part of a candidate block being mined by a sending node, wherein the invalid array of transactions includes the invalid transaction;
   performing a validation operation to determine that the invalid transaction is invalid;
   determining that the valid transaction is associated with the invalid transaction; and
   based on the association between the valid transaction and the invalid transaction, replacing the invalid transaction with the valid transaction so as to convert the invalid array of transactions into a valid array of transactions that is being mined by the sending node, thereby enabling the receiving node to validate the valid array of transactions during a mining phase and prior to discovery of a block solution.

8. The method of claim 7, wherein determining that the valid transaction is associated with the invalid transaction includes:

   in response to determining that the invalid transaction is invalid, transmitting a peer-to-peer message to the sending node identifying the invalid transaction;
   receiving from the sending node, in response to the peer-to-peer message, a response message containing the valid transaction; and
   replacing the invalid transaction with the valid transaction so as to convert the invalid array of transactions into a valid array of transactions that is being mined by the other node, thereby enabling the node to validate the valid array of transactions.

9. The method of claim 8, wherein the peer-to-peer message is an encrypted message.

10. The method of claim 7, further comprising receiving a commit message containing a hashed identifier of the invalid transaction and an identifier of the valid transaction, and wherein determining that the valid transaction is associated with the invalid transaction includes:

   hashing the transaction identifier of the invalid transaction to obtain a hash result; and,
   in response to determining that the hash result matches the hashed identifier in the commit message, replacing the invalid transaction with the valid replacement transaction so as to convert the invalid array of transactions into the valid array of transactions.

11. The method of claim 10, wherein the commit message includes a complexity parameter indicating a number of times the identifier of the invalid transaction is to be hashed to obtain the hash result.

12. The method of claim 10 or claim 11, wherein the identifier of the valid transaction in the commit message includes a copy of the valid transaction.

13. The method of any one of claims 10 to 12, wherein receiving a commit message includes receiving and storing a plurality of commit messages broadcast by a plurality of nodes, each commit message containing a respective hashed identifier for a respective invalid transaction, and wherein determining that the hash result matches the hashed identifier includes comparing the hash result to the respective hashed identifiers and determining that the hash result matches one of the respective hashed identifiers.

14. A computing device, the computing device including:

one or more processors;

memory; and

computer-executable instructions stored in the memory that, when executed by the one or more processors, cause the processors to carry out the method claimed in any one of claims 1 to 13.

15. A computer-readable medium storing processor-executable instructions, the processor-executable instructions including instructions that, when executed by one or more processors, cause the processors to carry out the method claimed in any one of claims 1 to 13.

**FIG. 1**

152i

152j

202  $Tx_0$  201

$Tx_1$  201  203

| $TxID_0$ | |
|---|---|
| Input(s) | Output(s) |
| **Input** <br> • Pointer to previous $Tx$ <br> • Index of UTXO in previous $Tx$ <br> • Unlocking script for unlocking from previous party <br><br> ⋮ <br><br> Optional further inputs <br> ⋮ | $\underline{UTXO_0}$ <br> • Amount <br> • Locking script locking to Alice <br><br><br> ⋮ <br><br> Optional further $UTXOs$ <br><br> ⋮ |

203

202

| $TxID_1$ | |
|---|---|
| Input(s) | Output(s) |
| **Input** <br> • Pointer to $Tx_0$ <br> • Index of $UTXO_0$ [within $Tx_0$] <br> • Unlocking script for unlocking $UTXO_0$ from Alice <br><br> ⋮ <br><br> Optional further inputs <br> ⋮ | $\underline{UTXO_1}$ <br> • Amount <br> • Locking script locking to Bob <br><br><br> ⋮ <br><br> Optional further $UTXOs$ <br><br> ⋮ |

203

Transaction
from Alice to Bob

↓

Validated by running: Alice's locking script (from output of $Tx_0$), together with Bob's unlocking script (as input to $Tx_1$). This checks that Bob's unlocking script in $Tx_1$ meets the condition(s) defined in Alice's locking script in $Tx_0$.

**FIG. 2**

**FIG. 3A**

**FIG. 3B**

**FIG. 4**

504

506

552

550

Propagation Service

510

Transaction Validation Service

512

Block Assembly Service

514

Blockchain Service

516

Block Validation Service

518

520

Tx storage

522

UTXO storage

524

Array database

526

Blockchain storage

## FIG. 5

600

602

Determine rate at which node *i* sends new valid transactions

604

rate < threshold?

No → 606

Designate node *i* as "trusted"

Yes

608

Designate node *i* as "suspect"

612

Disconnect and exclude node from network

Yes

610

Node "suspect" for > maximum time?

No

614

Time to switch?

No

Yes

616

Change node(s) to which connected

## FIG. 6

700

702 **Sending Node**

704 **Receiving Node**

706 **Multicast Network**

710 Send valid txs

Send poisoned tx

712

Transmit txs

714

718

Detect invalid tx

716

Request replacement tx

Send replacement tx

720

722 Announce poisoned array

Transmit announcement

724

Request array

Send poisoned array

728

726

Detect poisoned tx and replace with replacement tx

**FIG. 7**

**FIG. 8**

900

902
Sending
Node

904
Receiving
Node

906
Multicast
Network

910
Send commit message
including replacement tx

Send valid txs

Transmit commit and txs

Send poisoned tx

912
Transmit poisoned tx

Detect invalid tx and
determine if it
matches the commit

Create poisoned
array including
poisoned tx

914

916
Announce poisoned array

Transmit announcement

Request array

Send poisoned array

920

918
Detect poisoned tx

Repair array by
replacing poisoned tx
with replacement tx

922

**FIG. 9**

1000

1002 Sending Node

1004 Receiving Node

1006 Multicast Network

Send commit message including replacement tx

Send valid txs

Transmit txs and commit

Create poisoned array by including poisoned tx

Announce poisoned array

Transmit announcement

Request array

Send poisoned array

1010

Request missing tx

Send poisoned tx

1012

Detect invalid tx

1014

Confirm invalid tx matches commit

Repair array by replacing poisoned tx with replacement tx

1016

# FIG. 10

**EUROPEAN SEARCH REPORT**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2021/213922 A1 (NCHAIN LICENSING AG [CH]) 28 October 2021 (2021-10-28) * paragraphs [0013] - [0023], [0093] - [0107]; figures 4,5 * ----- | 1-15 | INV. H04L9/00 G06Q20/00 |

**TECHNICAL FIELDS SEARCHED (IPC)**

H04L
G07G
G06Q

The present search report has been drawn up for all claims

| Place of search | Date of completion of the search | Examiner |
|---|---|---|
| Munich | 9 July 2024 | Manet, Pascal |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 15 6920

This annex lists the patent family members relating to the patent documents cited in the above-mentioned European search report.
The members are as contained in the European Patent Office EDP file on
The European Patent Office is in no way liable for these particulars which are merely given for the purpose of information.

09-07-2024

| Patent document cited in search report | Publication date | Patent family member(s) | | Publication date |
|---|---|---|---|---|
| WO 2021213922 A1 | 28-10-2021 | CN | 115943609 A | 07-04-2023 |
| | | EP | 4122153 A1 | 25-01-2023 |
| | | GB | 2594295 A | 27-10-2021 |
| | | JP | 2023522119 A | 26-05-2023 |
| | | KR | 20230002815 A | 05-01-2023 |
| | | US | 2023162186 A1 | 25-05-2023 |
| | | WO | 2021213922 A1 | 28-10-2021 |

EPO FORM P0459

For more details about this annex : see Official Journal of the European Patent Office, No. 12/82

**REFERENCES CITED IN THE DESCRIPTION**

**Patent documents cited in the description**

• EP 4122153 A